# EUROPÄISCHE PATENTSCHRIFT

(11) **EP 3 152 335 B1**
(45) Veröffentlichungstag und Bekanntmachung des Hinweises auf die Patenterteilung: **12.09.2018**
(21) Anmeldenummer: 15729375.4
(22) Anmeldetag: 03.06.2015
(51) Int. Cl.: C21C 5/52, F27D 27/00, F27B 3/04, F27D 3/14, B22D 35/04, B22D 37/00, B22D 39/00, F27D 3/00

(54) **STATION UND VERFAHREN ZUR ÜBERFÜHRUNG EINER METALLSCHMELZE AUS EINEM SCHMELZOFEN IN EINEN TRANSPORTTIEGEL SOWIE EINE ANORDNUNG UND EIN SYSTEM MIT EINER SOLCHEN STATION**
STATION AND METHOD FOR TRANSFERRING MOLTEN METAL FROM A MELTING FURNACE INTO A TRANSPORT CRUCIBLE, AS WELL AS AN ARRANGEMENT AND A SYSTEM WITH SUCH A STATION
STATION ET PROCÉDÉ DE TRANSFERT D'UN MÉTAL EN FUSION D'UN FOUR DE FUSION DANS UN CREUSET DE TRANSPORT, AINSI QU'AGENCEMENT ET SYSTÈME ÉQUIPÉS D'UNE TELLE STATION

(30) Priorität: 05.06.2014 EP 14171399
(43) Veröffentlichungstag der Anmeldung: 12.04.2017
(73) Patentinhaber: Hydro Aluminium Rolled Products GmbH, 41515 Grevenbroich (DE)
(72) Erfinder: WALKENHORST, Oliver, 41470 Neuss (DE); HOMMEL, Oliver, 41462 Neuss (DE)
(74) Vertreter: Cohausz & Florack
(86) Internationale Anmeldenummer: PCT/EP2015/062411
(87) Internationale Veröffentlichungsnummer: WO 2015/185646

(56) Entgegenhaltungen:
- WO-A1-02/076656
- DE-U1- 20 115 148
- GB-A- 988 127
- JP-A- 2010 240 701

## Beschreibung

Die Erfindung betrifft eine Station und ein Verfahren zur Überführung einer Metallschmelze aus einem Schmelzofen in einen Transporttiegel. Weiterhin betrifft die Erfindung eine Anordnung mit einem Schmelzofen und einer solchen Station sowie ein System mit einer solchen Anordnung und einem Transporttiegel.

Derartige Stationen und Verfahren werden im Stand der Technik eingesetzt, um eine bestimmte Menge einer Metallschmelze, beispielsweise einer Aluminiumlegierung, aus einem Schmelzofen in einen Transporttiegel zu überführen, so dass die Metallschmelze mit dem Transporttiegel zu einer Gießstation, beispielsweise zum Gießen von Brammen, Blöcken, Halbzeugen oder Werkstücken, transportiert werden kann.

Für die Überführung der Metallschmelze aus dem Schmelzofen in den Transporttiegel werden im Stand der Technik verschiedene Verfahren angewendet.

So wird bei einem ersten bekannten Verfahren aus dem Stand der Technik der gesamte Schmelzofen hydraulisch angekippt, so dass das Flüssigmetall über eine Ausgießschnauze des Schmelzofens in eine feuerfest ausgekleidete Rinne fließen kann. Aus dieser Rinne fällt das Metall dann in einen entsprechend positionierten Transporttiegel. Dieses Verfahren erfordert eine mechanisch aufwändige Konstruktion des Schmelzofens und zudem einen hohen technischen Aufwand aufgrund des für das Ankippen des Schmelzofens benötigten Hydrauliksystems. Weiterhin führen das starke Durchmischen des Flüssigmetalls beim Fallen in den Transporttiegel sowie der intensive Kontakt des fallenden Flüssigmetalls mit der Umgebungsluft zu einer unerwünschten erhöhten Krätzebildung.

Bei einem weiteren aus dem Stand der Technik bekannten Verfahren wird die Metallschmelze mittels elektromagnetischer Förderpumpen vom Schmelzofen in einen bereitgestellten Transporttiegel transportiert. Hierzu wird ein Magnetfeld erzeugt, mit dem die Metallschmelze durch ein entsprechendes Rohr gefördert werden kann. Dieses Verfahren ist sehr störanfällig, da bereits kleinere Risse im Förderrohr zu einem elektrischen Erdschluss und damit zum Ausfall der Förderpumpe führen können. Ein solcher Ausfall der Förderpumpe ist nachteilig, da er relativ lange Anlagenstillstände und damit hohe Kosten zur Folge haben kann.

Bei einem weiteren aus dem internen Stand der Technik bekannten Verfahren werden zur Überführung der Metallschmelze in einen Transporttiegel mechanische Förderpumpen eingesetzt. Geeignete Förderpumpen sind beispielsweise von Pyrotek Inc., Spokane, WA, USA bekannt. Beispielsweise kann die Metallschmelze mittels eines elektrisch angetriebenen Graphitrotors gefördert werden. Der direkte Kontakt der Metallschmelze mit den beweglichen mechanischen Teilen der Förderpumpe führt zu hohen thermischen und mechanischen Belastungen dieser Teile, so dass derartige Förderpumpen einem erhöhten mechanischen Verschleiß unterliegen und daher häufige Wartungsintervalle und erhöhte Instandhaltungskosten bedingen.

Bei einem weiteren aus dem Stand der Technik bekannten Verfahren weist der Schmelzofen mechanisch verschlossene Abstichlöcher auf. Ein solches Abstichloch wird an einem stationären Schmelzofen an der Seitenwand im Bereich der tiefsten Stelle des Ofenbodens installiert und mit einem mechanischen Verschlussstopfen abgedichtet. Zum Überführen der Metallschmelze wird der Stopfen entfernt, so dass die Metallschmelze durch das Abstichloch aus dem Schmelzofen heraus und in einen entsprechend angeordneten Transporttiegel fließen kann. Nach Erreichen der gewünschten Metallmenge wird das Abstichloch wieder geschlossen. Dieses Verfahren hat den Nachteil, dass eine genaue Dosierung der dabei überführten Metallmenge nicht möglich ist. Weiterhin besteht die Gefahr, dass das Abstichloch aufgrund von Verschmutzungen nicht vollständig verschlossen werden kann.

Aus der JP 2010-240701 ist eine automatische Zuführvorrichtung für geschmolzenes Metall bekannt, die ein Rohr aufweist, das mit einer Seite in einen Schmelzofen getaucht ist und mit der anderen Seite durch einen flachen Deckel in eine Gießpfanne hineingeführt wird. Durch Reduzierung des Drucks in der Gießpfanne mit einer Vakuumpumpe wird flüssiges Metall aus dem Ofen durch das Rohr in die Gießpfanne überführt. Eine ähnliche Zuführvorrichtung ist auch aus der WO 02/076656 A1 bekannt. Diese Vorrichtungen haben jedoch den Nachteil, dass das in die Gießpfannen überführte flüssige Metall leicht umherspritzen und dadurch kritische Komponenten der Station beschädigen oder verunreinigen kann.

Ausgehend von diesem Stand der Technik liegt der vorliegenden Erfindung die Aufgabe zugrunde, eine Vorrichtung und ein Verfahren zur Überführung einer Metallschmelze aus einem Schmelzofen in einen Transporttiegel zur Verfügung zu stellen, bei dem die zuvor genannten Nachteile aus dem Stand der Technik nicht oder zumindest in geringerem Maße auftreten.

Diese Aufgabe wird erfindungsgemäß gelöst durch eine Station zur Überführung einer Metallschmelze aus einem Schmelzofen in einen Transporttiegel mit einer Andockkammer, die eine Andocköffnung aufweist und dazu eingerichtet ist, mit der Andocköffnung an eine Einfüllöffnung eines Transporttiegels angedockt zu werden, mit einer Absaugeinrichtung, die zum Absaugen eines Gases aus der Andockkammer und/oder aus einem an die Andockkammer angedockten Transporttiegel eingerichtet ist, und mit einem Saugrohr, das einen zwischen einer Einlassöffnung und einer Auslassöffnung verlaufendem Saugkanal aufweist, wobei die Einlassöffnung außerhalb der Andockkammer angeordnet ist und die Auslassöffnung derart angeordnet ist, dass eine durch den Saugkanal fließende und aus der Auslassöffnung austretende Metallschmelze durch die Andocköffnung gelangt.

Mit einer solchen Station kann eine Metallschmelze aus einem Schmelzofen in einen Transporttiegel überführt werden, ohne dass hierbei bewegliche mechanische Anlagenteile mit der Metallschmelze in Berührung kommen. Weiterhin müssen die für die Überführung der Metallschmelze erforderlichen Komponenten der Station, insbesondere das Saugrohr und die Absaugeinrichtung, nicht direkt mit dem Ofen verbunden werden, so dass es möglich ist, die Station praktisch jederzeit während des Schmelzofenbetriebs instandzuhalten, zu warten bzw. Komponenten der Station auszutauschen. Auf diese Weise führt beispielsweise der Ausfall des Saugrohrs nicht zum Stillstand des Schmelzofens, da das Saugrohr gewechselt werden kann, ohne dass hierzu der Schmelzofen abgeschaltet werden muss. Dadurch kann die Anlagenverfügbarkeit erhöht werden kann.

Darüber hinaus kann mit der Erfindung auch eine Erhöhung der Arbeitssicherheit erreicht werden, da ein Verspritzen von Metallschmelze, beispielsweise durch offene Rinnensysteme oder undichte Abstichlöcher, während der Überführung der Metallschmelze in den Transporttiegel nicht möglich ist, da die Metallschmelze in einem geschlossenen System transportiert wird.

Die Station dient zur Überführung einer Metallschmelze aus einem Schmelzofen in einen Transporttiegel. Bei der Metallschmelze kann es sich insbesondere um eine Aluminiumlegierung und bei dem Schmelzofen entsprechend um einen Schmelzofen für Aluminiumlegierungen handeln. Die Station ist vorzugsweise stationär im Bereich eines solchen Schmelzofens installiert. Anstelle von Aluminium bzw. einer Aluminiumlegierung kann es sich bei der Metallschmelze auch um ein anderes Metall bzw. eine andere Metalllegierung handeln wie zum Beispiel um eine Mg-Legierung, eine Cu-Legierung oder eine Pb-Legierung.

Mit der Metallschmelze in Kontakt tretende Teile der Station, insbesondere das Saugrohr, sind vorzugsweise an die zu transportierende Metallschmelze angepasst. Beispielsweise kann die Station, insbesondere das Saugrohr, Feuerfestmaterial wie zum Beispiel Keramiken umfassen, um die thermische und/oder chemische Beständigkeit zu erhöhen. Das Saugrohr kann beispielsweise mit Feuerfestmaterial ausgekleidet sein. Für eine Station zur Überführung von Aluminium oder einer Aluminiumlegierung ist die Station, insbesondere das Saugrohr, vorzugsweise für Temperaturen der Metallschmelze von mehr als 740 °C ausgelegt.

Die Station umfasst eine Andockkammer, die eine Andocköffnung aufweist. Die Andockkammer ist vorzugsweise als Unterdruckkammer, beispielsweise als Unterdruckglocke ausgebildet. Hierzu weist die Andockkammer vorzugsweise eine Geometrie auf, die für die mechanischen Belastungen durch einen Unterdruck im Innenraum der Andockkammer ausgelegt ist, vorzugsweise bis zu einer Druckdifferenz von mindestens 0,3 bar, vorzugsweise mindestens 0,6 bar zum Umgebungsdruck. Bei einem angenommenen Umgebungsdruck von 1 bar entspricht dies zum Beispiel einem Innendruck von 0,7 bar oder weniger bzw. von 0,4 bar oder weniger. Weiterhin ist die Andockkammer vorzugsweise für eine ausreichende Abdichtung ausgelegt, so dass ein entsprechender Unterdruck in der Andockkammer aufrechterhalten werden kann.

Die Andockkammer ist dazu eingerichtet mit der Andocköffnung an eine Einfüllöffnung eines Transporttiegels angedockt zu werden. Zu diesem Zweck kann die Andockkammer im Bereich der Andocköffnung beispielsweise einen Andock-Flanschbereich aufweisen, der vorzugsweise eine ebene Kontaktfläche zum Anlegen an eine entsprechende Kontaktfläche an einer Einfüllöffnung eines Transporttiegels aufweist, und/oder eine Dichtung, so dass die Andockkammer gasdicht an die Einfüllöffnung eines Transporttiegels angedockt werden kann. Unter dem Andocken wird vorliegend verstanden, dass die Andocköffnung der Andockkammer derart an der Einfüllöffnung eines Transporttiegels angeordnet wird, dass eine gegenüber der Umgebung im Wesentlichen gasdichte Verbindung zwischen der Andocköffnung und der Einfüllöffnung bzw. zwischen dem Innenraum des Transporttiegels und dem Innenraum der Andockkammer geschaffen wird.

Durch die Verwendung einer Andockkammer anstelle zum Beispiel eines flachen Deckels können Probleme durch umherspritzendes flüssiges Metall beim Überführen der Metallschmelze reduziert werden. Insbesondere stellt eine an einen Transporttiegel angedockte Andockkammer mit ihrem Innenraum einen Raumbereich bereit, der einerseits mit dem Innenraum des Transporttiegels verbunden ist, so dass durch Absaugen eines Gases aus der Andockkammer der Druck im Transporttiegel reduziert werden kann, und der andererseits außerhalb des Transporttiegels angeordnet ist, so dass im Transporttiegel umherspritzendes flüssiges Metall nicht oder nur in geringem Maße in den Raumbereich der Andockkammer gelangt.

Auf diese Weise können Komponenten, die an der Andockkammer angeschlossen oder zumindest teilweise in dieser angeordnet sind, vor Metallspritzern geschützt werden. Insbesondere kann auf diese Weise die Absaugeinrichtung vor Metallspritzern geschützt werden, so dass im Wesentlichen kein flüssiges Metall in die Absaugeinrichtung gelangen kann und damit deren Lebensdauer erhöht wird. Zu diesem Zweck weist die Andockkammer bevorzugt eine Innenraumhöhe von mindestens 20 cm, weiter bevorzugt von mindestens 30 cm auf.

Die Station umfasst weiterhin eine Absaugeinrichtung. Als Absaugeinrichtung kommt grundsätzlich jede Einrichtung in Frage, die geeignet ist, ein Gas aus der Andockkammer, d.h. aus dem Innenraum der Andockkammer, zu entfernen. Beispielsweise kann die Absaugeinrichtung eine Pumpe oder auch eine Venturi-Düse umfassen. Die Absaugeinrichtung ist vorzugsweise derart eingerichtet, dass mit der Absaugeinrichtung ein Unterdruck in der Andockkammer und/oder in einem an die Andockkammer angedockten Transporttiegel mit einer Druckdifferenz zum Umgebungsdruck von mindestens 0,3 bar, insbesondere mindestens 0,6 bar, erreicht werden kann.

Die Absaugeinrichtung ist zum Absaugen eines Gases aus der Andockkammer und/oder aus einem an die Andockkammer angedockten Transporttiegel eingerichtet. Zu diesem Zweck weist die Absaugeinrichtung vorzugsweise einen Ansaugkanal mit einer Ansaugöffnung zum Ansaugen eines Gases auf, wobei die Ansaugöffnung in der Andockkammer angeordnet ist oder der Ansaugkanal sich aus der Andocköffnung heraus erstreckt, so dass im Betrieb ein Gas aus der Andockkammer und/oder aus einem an die Andockkammer angedockten Transporttiegel durch die Ansaugöffnung und den Ansaugkanal absaugbar ist.

Weiterhin umfasst die Station ein Saugrohr, das einen zwischen einer Einlassöffnung und einer Auslassöffnung verlaufenden Saugkanal aufweist. Das Saugrohr ist insbesondere zur Führung von Metallschmelze ausgelegt, d.h. insbesondere für die damit verbundenen thermischen und mechanischen Belastungen. Vorzugsweise besteht das Saugrohr im Wesentlichen aus Metall und/oder Feuerfestmaterial wie z.B. Keramik. Das Saugrohr kann einteilig oder mehrteilig, beispielsweise als eine Mehrzahl von aneinander geflanschten Rohrabschnitten, ausgebildet sein. Der Saugkanal ist zwischen der Einlass- und der Auslassöffnung vorzugsweise im Wesentlichen gasdicht ausgebildet, so dass eine im Saugrohr aufsteigende Metallschmelze beim Ansaugen nicht abreißt.

Die Einlassöffnung des Saugrohrs ist außerhalb der Andockkammer angeordnet. Insbesondere ist die Einlassöffnung so angeordnet, dass sie in die Metallschmelze eines Schmelzofens eintauchbar ist. Beispielsweise kann das Saugrohr im Bereich der Einlassöffnung einen im Wesentlichen vertikal verlaufenden Rohrbereich aufweisen, der von oben in eine Entnahmeöffnung eines Schmelzofens einführbar und so in eine Metallschmelze im Schmelzofen eintauchbar ist.

Die Auslassöffnung ist derart angeordnet, dass eine durch den Saugkanal fließende und aus der Auslassöffnung austretende Metallschmelze durch die Andocköffnung gelangt. Zu diesem Zweck verläuft das Saugrohr vorzugsweise von der Einlassöffnung außerhalb der Andockkammer durch eine Öffnung in der Wand der Andockkammer bzw. durch ein an der Andockkammer vorgesehenes Ansatzrohr hindurch in den Innenraum der Andockkammer hinein. Die Auslassöffnung kann beispielsweise innerhalb der Andockkammer oder in der Ebene der Andocköffnung angeordnet sein, so dass während des Betriebs der Station eine aus der Auslassöffnung austretende Metallschmelze durch die Andocköffnung fällt und so durch diese hindurch in einen an die Andockkammer angedockten Transporttiegel gelangt. Alternativ kann sich der Saugkanal auch durch die Andocköffnung hindurch erstrecken, so dass die Andocköffnung beispielsweise unterhalb der Andockkammer angeordnet ist. Eine im Betrieb durch das Saugrohr fließende Metallschmelze gelangt dann durch die Andocköffnung, während sie sich noch innerhalb des Saugkanals befindet, und fällt dann nach dem Austritt durch die Austrittsöffnung in einen an die Andockkammer angedockten Transporttiegel.

Die zuvor genannte Aufgabe wird erfindungsgemäß weiterhin gelöst durch eine Anordnung mit einem Schmelzofen, der eine Entnahmeöffnung zur Entnahme einer Metallschmelze aufweist, und mit der zuvor beschriebenen Station, wobei die Station so eingerichtet ist, dass die Einlassöffnung des Saugrohrs durch die Entnahmeöffnung des Schmelzofens in einer Metallschmelze im Schmelzofen eintauchbar ist.

Die Entnahmeöffnung ist vorzugsweise auf einer Oberseite des Schmelzofens oder eines Teils davon angeordnet, so dass das Saugrohr von oben in die Entnahmeöffnung des Schmelzofens und damit in die Metallschmelze im Schmelzofen eingetaucht werden kann. Beispielsweise kann der Schmelzofen einen Entnahmebereich aufweisen, an dessen Oberseite die Entnahmeöffnung angeordnet ist.

Die Station ist so eingerichtet, dass die Einlassöffnung des Saugrohrs durch die Entnahmeöffnung des Schmelzofens in eine Metallschmelze im Schmelzofen eintauchbar ist. Hierzu kann die Station insbesondere geeignete Antriebsmittel umfassen, mit denen die Einlassöffnung des Saugrohrs vorzugsweise im Wesentlichen vertikal in eine Metallschmelze im Schmelzofen eingetaucht werden kann.

Die Station ist vorzugsweise ortsfest angeordnet, insbesondere in einer bestimmten Position relativ zum Schmelzofen. Auf diese Weise muss die Station nicht bei jedem Überführungsvorgang neu abhängig von ihrer Position zum Schmelzofen eingestellt werden, so dass eine schnellere und rationellere Befüllung eines Transporttiegels oder mehrerer Transporttiegel nacheinander mit Metallschmelze ermöglicht wird.

Die zuvor genannte Aufgabe wird weiterhin erfindungsgemäß gelöst durch ein System umfassend die zuvor beschriebene Anordnung sowie einen Transporttiegel mit einer Einfüllöffnung, wobei die Andockkammer dazu eingerichtet ist, mit der Andocköffnung an die Einfüllöffnung des Transporttiegels angedockt zu werden.

Die Einfüllöffnung befindet sich vorzugsweise auf der Oberseite des Transporttiegels, so dass die Andockkammer durch eine im Wesentlichen vertikale Bewegung mit der Andocköffnung an die Einfüllöffnung angedockt werden kann. Die Andockkammer und der Transporttiegel sind vorzugsweise so aneinander angepasst, dass mit der Andockkammer eine dichte Verbindung zwischen der Andocköffnung und der Einfüllöffnung des Transporttiegels hergestellt werden kann. Zu diesem Zweck können die Andockkammer um die Andocköffnung und der Transporttiegel um die Einfüllöffnung insbesondere zueinander korrespondierende Andockflächen aufweisen, die beim Andocken der Andockkammer einander gegenüberliegend angeordnet werden. Zur Herstellung einer dichten Verbindung zwischen der Andocköffnung und der Einfüllöffnung können die korrespondierenden Andockflächen beim Andocken aufeinandergedrückt werden. Mindestens eine der Andockflächen kann auch eine Dichtung, beispielsweise einen Dichtungsring, aufweisen, der beim Andocken gegen die korrespondierende andere Andockfläche gedrückt wird. Die Dichtung kann insbesondere mittels einer Schwalbenschwanzverbindung an einer der Andockflächen angebracht sein. Insbesondere kann in eine der Andockflächen eine Schwalbenschwanznut eingelassen sein, in die eine Dichtung eingesetzt ist. Auf diese Weise kann die Dichtung sicher an einer festen Position gehalten werden.

Während der Schmelzofen und die Station vorzugsweise eine bestimmte feste relative Position zueinander aufweisen, dient der Transporttiegel zum Transport der Metallschmelze an einen anderen Ort, wie zum Beispiel einer Gießstation, und ist damit gegenüber dem Schmelzofen und der Station grundsätzlich mobil. Für die Dauer der Überführung der Metallschmelze vom Schmelzofen in den Transporttiegel mittels der Station nimmt der Tiegel zur Station jedoch vorzugsweise eine feste Position ein, die vorliegend als Befüllposition bezeichnet wird.

Die zuvor genannte Aufgabe wird erfindungsgemäß weiterhin gelöst durch ein Verfahren zur Überführung eines flüssigen Metalls aus einem Schmelzofen in einen Transporttiegel mittels der zuvor beschriebenen Anordnung, wobei das Verfahren folgende Schritte umfasst: Bereitstellen eines Transporttiegels in einer Befüllposition, insbesondere eines Transporttiegels gemäß dem zuvor beschriebenen System, Andocken der Andockkammer mit der Andocköffnung an eine Einfüllöffnung des Transporttiegels, Positionierung der Einlassöffnung des Saugrohres in einer Metallschmelze im Schmelzofen und Aktivieren der Absaugeinrichtung, so dass in der Andockkammer und/oder im Transporttiegel ein Unterdruck gegenüber dem Umgebungsdruck erzeugt wird, so dass die Metallschmelze durch die Einlassöffnung des Saugrohres eingesaugt und durch den Saugkanal in den Transporttiegel gelangt. Die Schritte dieses Verfahrens können in der genannten Reihenfolge durchgeführt werden. Es ist jedoch auch denkbar, dass die Schritte in einer anderen Reihenfolge durchgeführt werden und/oder dass mehrere Schritte gleichzeitig durchgeführt werden.

Bei einem Schritt des Verfahrens wird der Transporttiegel in einer Befüllposition bereitgestellt. In der Befüllposition ist der Transporttiegel insbesondere so relativ zur Station der Anordnung angeordnet, dass die Andockkammer mit der Andocköffnung an die Einfüllöffnung des Transporttiegels andockbar ist, vorzugsweise durch eine Bewegung der Andockkammer in im Wesentlichen vertikaler Richtung.

Bei einem weiteren Schritt des Verfahrens wird die Andockkammer der Station mit der Andocköffnung an die Einfüllöffnung des Transporttiegels angedockt. Hierbei wird vorzugsweise die Andockkammer relativ zum Transporttiegel so bewegt, dass die Andocköffnung gegenüber der Einfüllöffnung angeordnet wird und der Innenraum der Andockkammer mit dem Innenraum des Transporttiegels über die Andocköffnung und die Einfüllöffnung miteinander verbunden werden, vorzugsweise durch eine gegenüber der Umgebung im Wesentlichen gasdichte Verbindung.

Bei einem weiteren Schritt des Verfahrens wird die Einlassöffnung des Saugrohres in einer Metallschmelze im Schmelzofen positioniert. Hierzu kann die Einlassöffnung beispielsweise durch die Entnahmeöffnung des Schmelzofens in eine Metallschmelze im Schmelzofen eingetaucht werden. Vorzugsweise wird das Saugrohr in einer im Wesentlichen senkrechten Bewegung durch die Entnahmeöffnung hinab in den Schmelzofen eingeführt und in die Metallschmelze eingetaucht.

Der zuvor genannte Schritt kann beispielsweise vor, nach oder auch zeitgleich mit dem Schritt des Andockens der Andockkammer an den Transporttiegel erfolgen. Die Entnahmeöffnung des Saugrohrs kann auch für eine längere Zeit in der Metallschmelze im Schmelzofen verbleiben, beispielsweise für die Befüllung mehrerer Transporttiegel. Alternativ kann die Entnahmeöffnung des Saugrohrs auch nach jeder Befüllung eines Transporttiegels aus der Metallschmelze herausgefahren werden.

Bei einem weiteren Schritt des Verfahrens wird die Absaugeinrichtung aktiviert, so dass in der Andockkammer und/oder im Transporttiegel ein Unterdruck gegenüber dem Umgebungsdruck erzeugt wird. Durch das Aktivieren der Absaugeinrichtung wird ein Gas aus der Andockkammer abgesaugt, so dass sich der Druck in der Absaugkammer und/oder in dem damit gekoppelten Transporttiegel auf einen Wert unterhalb des Umgebungsdrucks außerhalb des Transporttiegels erniedrigt. Die Metallschmelze wird dann durch den höheren Umgebungsdruck und den entsprechend geringeren Druck im Saugkanal durch die Einlassöffnung des Saugkanals und durch diesen hindurch zur Auslassöffnung des Saugkanals transportiert, so dass die Metallschmelze durch die Andocköffnung und die Einfüllöffnung in den Transporttiegel gelangt. Auf diese Weise füllt sich der Transporttiegel nach und nach mit Metallschmelze aus dem Schmelzofen.

Die Metallschmelze weist beim Eintritt in den Saugkanal vorzugsweise eine Temperatur auf, die mindestens 80 °C, vorzugsweise mindestens 100 °C, insbesondere mindestens 110 °C oberhalb der Schmelztemperatur der Metallschmelze liegt. Handelt es sich bei der Metallschmelze um eine Aluminiumlegierung, so liegt deren Temperatur bei Eintritt in den Saugkanal vorzugsweise bei mindestens 740 °C, weiter bevorzugt bei mindestens 770 °C. Auf diese Weise kann das Risiko gesenkt oder sogar verhindert werden, dass die Metallschmelze innerhalb des Saugkanals unter die Schmelztemperatur abkühlt und dort erstarrt.

Weiterhin liegt die Temperatur der Metallschmelze bei Eintritt in den Saugkanal bevorzugt bei maximal 850 °C, vorzugsweise bei maximal 820 °C, insbesondere bei maximal 800 °C. Bei höheren Temperaturen reduziert sich die Standzeit der Station aufgrund der hohen thermischen Belastung deutlich. Weiterhin erfordern höhere Temperaturen den Einsatz spezieller Materialien für die Station bzw. aufwändiger Kühlmechanismen und führen daher zu höheren Kosten.

Wenn der Transporttiegel die gewünschte Menge an Metallschmelze beinhaltet, kann die Überführung von Metallschmelze durch Desaktivierung der Absaugeinrichtung beendet werden. Auf diese Weise lässt sich die Menge an überführter Metallschmelze gut dosieren.

Es hat sich herausgestellt, dass mit dem zuvor beschriebenen Verfahren sowie mit der zugehörigen Station zur Überführung einer Metallschmelze aus einem Schmelzofen in einen Transporttiegel bzw. mit der beschriebenen Anordnung bzw. mit dem beschriebenen System eine Überführung einer Metallschmelze aus dem Schmelzofen in den Transporttiegel möglich ist, ohne dass bewegliche, mechanische Bauteile wie zum Beispiel Förderschnecken oder Pumpenteile mit der Metallschmelze in direkten Kontakt kommen. Auf diese Weise wird ein robustes Überführungsverfahren mit vergleichsweise geringem Wartungsaufwand erreicht. Weiterhin kann auf diese Weise auch eine Verbesserung der Arbeitssicherheit erreicht werden, da es beim Befüllen des Transporttiegels aufgrund des geschlossenen Unterdrucksystems zu keinem Verspritzen von Metallschmelze beispielsweise aus einer offenen Rinne kommt und zudem im Wesentlichen geschlossene Transporttiegel verwendet werden können, so dass es auch beim Transport der Transporttiegel nicht zum unerwünschten Austritt von Metallschmelze aus dem Transporttiegel kommen kann.

Darüber hinaus führen die beschriebene Station, die Anordnung, das System und das Verfahren auch zu einer Erhöhung der Produktivität und Prozessstabilität, da sich der Befüllvorgang des Transporttiegels gegenüber anderen Befüllverfahren verkürzen lässt. Auch mögliche Anlagenstillstände können auf diese Weise verkürzt werden, da die Station beispielsweise auch bei gefülltem Schmelzofen gewartet bzw. repariert werden kann.

Im Folgenden werden verschiedene Ausführungsformen für die zuvor beschriebene Station, die zuvor beschriebene Anordnung, das zuvor beschriebene System sowie das zuvor beschriebene Verfahren beschrieben. Die Ausführungsformen sind dabei jeweils auf alle vorgenannten Kategorien (Station, Anordnung, System, Verfahren) entsprechend übertragbar, auch wenn sie nachfolgend teilweise nur für einzelne Kategorien im Detail beschrieben sind.

Bei einer ersten Ausführungsform weist die Station ein stationäres Gerüst auf, mit dem die Andockkammer, die Absaugeinrichtung und/oder das Saugrohr jeweils unmittelbar oder mittelbar verbunden sind. Vorzugsweise handelt es sich bei dem Gerüst um ein Gerüst, das mit dem Untergrund oder einem anderen stationären Aufbau fest verbunden ist. Auf diese Weise wird eine stationäre Station bereitgestellt, die beispielsweise in unmittelbarer Nähe eines Schmelzofens angeordnet werden kann, so dass lediglich die zu befüllenden Transporttiegel nacheinander zur Station geführt werden müssen. Auf diese Weise kann ein schnellerer und einfacherer Befüllvorgang erreicht werden.

Unter dem Begriff "unmittelbar verbunden" wird vorliegend verstanden, dass eine Komponente (z.B. die Andockkammer) direkt mit einer anderen Komponente (z.B. dem Gerüst) verbunden ist. Unter dem Begriff "mittelbar verbunden" wird vorliegend verstanden, dass eine Komponente (z.B. das Saugrohr) über mindestens eine dritte Komponente (z.B. die Andockkammer) mit der jeweils anderen Komponente (z.B. dem Gerüst) verbunden ist.

Bei einer weiteren Ausführungsform umfasst die Station eine Hubeinrichtung, die zu einer im Wesentlichen vertikalen Bewegung der Andockkammer und/oder des Saugrohrs eingerichtet ist. Mit dieser Hubeinrichtung lässt sich das Andocken der Andockkammer an die Einfüllöffnung eines Transporttiegels und/oder das Eintauchen der Einlassöffnung des Saugrohrs in eine Metallschmelze im Schmelzofen auf einfache Weise realisieren, ohne dass komplizierte Bewegungsabläufe der Station bzw. von Teilen davon erforderlich sind. Vorzugsweise bewegt die Hubeinrichtung gleichzeitig die Andockkammer und das Saugrohr, so dass insbesondere eine zweite Hubeinrichtung eingespart werden kann. Alternativ können zur Bewegung der Andockkammer und des Saugrohres jedoch auch zwei separate Hubeinrichtungen vorgesehen sein, so dass sich die Andockkammer und das Saugrohr unabhängig voneinander verfahren lassen. Auf diese Weise kann beispielsweise die Einlassöffnung des Saugrohrs für mehrere Befüllvorgänge in der Metallschmelze verbleiben.

Die Hubeinrichtung ist vorzugsweise an einem stationären Gerüst befestigt. Beispielsweise kann die Hubeinrichtung einen an einem Gerüst befestigten Linearantrieb umfassen, der dazu eingerichtet ist, einen Ausleger im Wesentlichen in vertikaler Richtung zu verfahren. An dem Ausleger kann mittelbar oder unmittelbar die Andockkammer angebracht sein, so dass diese durch Bewegung des Linearantriebs in vertikaler Richtung verfahren werden kann.

Bei einer weiteren Ausführungsform weist die Station einen Sensor auf, vorzugsweise innerhalb der Andockkammer, der dazu eingerichtet ist festzustellen, ob eine Einfüllöffnung eines Transporttiegels unterhalb der Andockkammer angeordnet ist und/oder ob die Einfüllöffnung des Transporttiegels zum Andocken der Andockkammer freiliegt. Vorzugsweise ist der Sensor dazu eingerichtet festzustellen, ob die Einfüllöffnung des Transporttiegels mit einem Deckel verschlossen ist oder nicht. Bei dem Sensor kann es sich beispielsweise um einen optischen Sensor handeln. Vorzugsweise ist eine zur Steuerung der Station eingerichtete Steuereinrichtung vorgesehen, die dazu eingerichtet ist, die Station abhängig vom Signal des Sensors zu steuern. Beispielsweise kann die Steuereinrichtung dazu eingerichtet sein, ein Verfahren der Andockkammer mit einer Hubeinrichtung zum Andocken der Andockkammer an der Einfüllöffnung nur dann zuzulassen, wenn der Sensor anzeigt, dass die Einfüllöffnung zum Andocken der Andockkammer freiliegt. Auf diese Weise können Kollisionen der Andockkammer oder von Komponenten der Andockkammer beispielsweise mit einem Deckel für die Einfüllöffnung des Transporttiegels verhindert werden. Der Sensor kann beispielsweise an oder in der Andockkammer angeordnet sein.

Der Sensor kann zum Schutz vor äußeren Einflüssen und zur geeigneten Positionierung oberhalb der Einfüllöffnung innerhalb der Andockkammer angeordnet werden, und zwar vorzugsweise mindestens 5 cm, weiter bevorzugt mindestens 10 cm oberhalb der Andocköffnung. Auf diese Weise kann verhindert werden, dass der Sensor durch im Transporttiegel umherspritzende Metallschmelze beschädigt wird.

Bei einer weiteren Ausführungsform, insbesondere einer Ausführungsform der Station, ist die Andockkammer federnd gelagert, insbesondere in vertikaler Richtung. Hierzu kann die Andockkammer beispielsweise mittels mindestens einer Feder, insbesondere einer mechanischen Feder oder einer Gasdruckfeder, an einem dazu vorgesehenen Bauteil, wie z.B. dem zuvor beschriebenen im Wesentlichen in vertikaler Richtung verfahrbaren Ausleger, angebracht sein. Durch die federnde Lagerung der Andockkammer besteht ein größerer Spielraum beim Andocken der Andockkammer mit der Andocköffnung an die Einfüllöffnung eines Transporttiegels. Insbesondere kann durch die federnde Lagerung erreicht werden, dass die Andockkammer über den gesamten Umfang der Andocköffnung an der Einfüllöffnung anliegt. Einerseits kann auf diese Weise eine Beschädigung der Andockkammer bzw. des Transporttiegels verhindert werden. Andererseits kann auf diese Weise zuverlässiger eine dichte Verbindung zwischen der Andockkammer und dem Transporttiegel erreicht werden.

Bei einer weiteren Ausführungsform weist die Station einen Drehantrieb zum Verschwenken der Einlassöffnung des Saugrohrs auf. Beispielsweise kann der Drehantrieb für das Verschwenken des Saugrohrs oder auch der Andockkammer zusammen mit dem Saugrohr eingerichtet sein. Auf diese Weise wird erreicht, dass insbesondere das Saugrohr aus dem Bereich des Schmelzofens herausschwenkbar ist, so dass dieses während des Betriebs, d.h. bei gefülltem Schmelzofen, ausgetauscht oder repariert werden kann. Auf diese Weise können Revisionen bzw. Reparaturen im laufenden Betrieb durchgeführt und Stillstandzeiten somit reduziert werden.

Ist die Andockkammer an einem Ausleger eines Gerüsts befestigt, so kann der Drehantrieb zum Verschwenken der Einlassöffnung des Saugrohrs beispielsweise zwischen dem Ausleger und der Andockkammer angeordnet werden. Auf diese Weise können die Andockkammer gedreht und das Saugrohr verschwenkt werden.

Bei einer weiteren Ausführungsform, insbesondere der Station, weist die Andockkammer ein Ansatzrohr auf, welches zum Anschluss des Saugrohres an die Andockkammer eingerichtet ist. Das Ansatzrohr kann beispielsweise mit einer Wand der Andockkammer verschweißt sein. Vorzugsweise weist das Ansatzrohr einen Flansch zur Befestigung des Saugrohrs am Ansatzrohr auf. Auf diese Weise kann das Saugrohr mittels einer Flanschverbindung an dem Ansatzrohr angeschlossen werden. Durch diesen Aufbau kann das Saugrohr relativ einfach an die Andockkammer montiert bzw. von dieser demontiert werden, so dass ein Austausch oder eine Wartung des Saugrohrs vereinfacht wird.

Das Saugrohr weist vorzugweise einen Abschnitt auf, der durch das Ansatzrohr in die Andockkammer hineinführbar ist. Der Abschnitt ist vorzugsweise austauschbar. Auf diese Weise kann Metallschmelze durch das Saugrohr in die Andockkammer hineingeführt werden, ohne dass die Metallschmelze unmittelbar mit dem Ansatzrohr in Berührung kommt. Der durch das Ansatzrohr in die Andockkammer hineinführbare Abschnitt des Saugrohrs weist vorzugsweise einen Flansch auf, der mit dem Flansch des Ansatzrohrs verbindbar ist. Das Saugrohr kann weiterhin einen zweiten Abschnitt mit einem Flansch umfassen, der mit dem Flansch des ersten Abschnitts und/oder mit dem Flansch des Ansatzrohrs verbindbar ist. Vorzugsweise kann der Flansch des ersten Abschnitts zwischen dem Flansch des Ansatzrohrs und dem Flansch des zweiten Abschnitts angeordnet und mit diesen verbunden, insbesondere verschraubt, werden.

Der durch das Ansatzrohr in die Andockkammer hineinführbare Abschnitt des Saugrohrs ist vorzugsweise mit Feuerfestmaterial wie zum Beispiel Keramik ausgekleidet. Dieser Abschnitt ist besonders hohen thermischen bzw. chemischen Belastungen durch die Metallschmelze ausgesetzt, insbesondere wenn die Metallschmelze in diesem Abschnitt umgelenkt wird. Durch das Feuerfestmaterial lässt sich der Verschleiß des Abschnitts reduzieren und dessen Lebensdauer verlängern.

Bei einer weiteren Ausführungsform ist die Auslassöffnung des Saugrohrs innerhalb der Andockkammer angeordnet. Die Auslassöffnung ist also vorzugsweise oberhalb der Auslassöffnung angeordnet, und zwar vorzugsweise mindestens 5 cm, insbesondere mindestens 10 cm oberhalb der Auslassöffnung. Auf diese Weise ist die Auslassöffnung im angedockten Zustand der Andockkammer gegenüber dem Innenraum des Transporttiegels zurückversetzt, so dass im Transporttiegel umherspritzende Metallschmelze nicht mehr oder zumindest in nur noch geringerem Maße zum Saugrohr gelangen kann. Insbesondere kann dadurch die Bildung von Krätzeklumpen an der Auslassöffnung des Saugrohrs verhindert werden. Weiterhin wird auf diese Weise gewährleistet, dass die Metallschmelze vollständig aus dem Saugrohr herauslaufen kann, so dass es zu keiner Verstopfung des Saugrohrs aufgrund erstarrter Metallschmelze kommen kann.

Bei einer weiteren Ausführungsform weist die Absaugeinrichtung einen Ansaugkanal mit einer Ansaugöffnung zum Ansaugen eines Gases auf, wobei die Ansaugöffnung in der Andockkammer angeordnet ist, und zwar insbesondere oberhalb der Andocköffnung, vorzugsweise mindestens 5 cm, weiter bevorzugt mindestens 10 cm oberhalb der Andocköffnung. Auf diese Weise wird verhindert, dass in dem Transporttiegel umherspritzende Metallschmelze in die Absaugeinrichtung gelangen und deren Funktion beeinträchtigen kann.

Bei einer weiteren Ausführungsform weist die Station einen mit der Andockkammer verbundenen Füllstandsensor auf, der dazu eingerichtet ist, das Überschreiten eines vorgegebenen Füllniveaus innerhalb eines mit einer Einfüllöffnung an die Andocköffnung angedockten Transporttiegels zu detektieren.

Im angedockten Zustand der Andockkammer, d.h. wenn die Andockkammer mit der Andocköffnung an die Einfüllöffnung eines Transporttiegels angedockt ist, ist eine Sichtinspektion des Innenraums des Transporttiegels und des Füllstands innerhalb des Transporttiegels nicht oder nur schwierig möglich. Durch das Vorsehen eines Füllstandsensors kann erreicht werden, dass dennoch eine sichere Überprüfung der Füllstandhöhe innerhalb des Transporttiegels möglich ist.

Der Füllstandsensor kann beispielsweise durch zwei sich aus der Andockkammer durch die Andocköffnung erstreckende Elektroden realisiert werden, die sich im angedockten Zustand an den Transporttiegel in den Innenraum des Transporttiegels erstrecken. Sobald die Metallschmelze innerhalb des Transporttiegels mit beiden Elektroden in Berührung kommt, führt dies zu einem Kurzschluss der Elektroden, so dass auf diese Weise bestimmt werden kann, zu welchen Zeitpunkt die Füllhöhe der Metallschmelze im Transporttiegel die unteren Enden der Elektroden erreicht hat. Beispielsweise kann auf diese Weise eine Notabschaltung aktiviert werden, um zu verhindern, dass die Füllstandhöhe innerhalb des Transporttiegels einen vorgegebenen Grenzwert überschreitet. Alternativ oder zusätzlich kann der Transporttiegel während des Überführens einer Metallschmelze auch gewogen werden, beispielsweise durch eine Wägeeinrichtung in einem den Transporttiegel tragenden Transferwagen. Für den Ausfall einer solchen Wägeeinrichtung bietet der Füllstandsensor eine zusätzliche Sicherheit.

Bei einer weiteren Ausführungsform, insbesondere einer Ausführungsform der Station, umfasst die zum Absaugen eines Gases aus der Andockkammer eingerichtete Absaugeinrichtung eine Venturi-Düse. Unter einer Venturi-Düse wird vorliegend ein Bauteil mit einem Strömungskanal verstanden, wobei der Strömungskanal eine Querschnittsverengung aufweist und wobei im Bereich der Querschnittsverengung ein Ansaugkanal in den Strömungskanal mündet. Beim Durchleiten eines Gases durch den Strömungskanal kommt es im Bereich der Querschnittsverengung zu einem Druckabfall, durch den Gas aus dem Ansaugkanal in den Strömungskanal gesaugt wird. Der Ansaugkanal ist vorzugsweise mit der Andockkammer verbunden, so dass auf diese Weise Gas aus der Andockkammer und/oder aus einem daran angedockten Transporttiegel heraus gesaugt und somit ein Unterdruck in der Andockkammer und/oder in einem an die Andockkammer angedockten Transporttiegel erzeugt werden kann.

Das aus dem Transporttiegel durch die Andockkammer abgesaugte Gas ist häufig sehr staubhaltig oder weist andere Verunreinigungen auf, so dass ein Einsatz mechanischer Pumpen zum Absaugen des Gases zu einem erhöhten Wartungseinsatz aufgrund des Kontakts beweglicher mechanischer Pumpenteile mit dem staubhaltigen Gas führen würde. Durch die Verwendung einer Venturi-Düse kann das staubhaltige Gas abgesaugt werden, ohne dass es mit beweglichen Pumpenteilen in Kontakt kommt, so dass ein geringerer Wartungsaufwand entsteht. Vorzugsweise weist die Station eine Druckluftzuleitung zur Versorgung der Venturi-Düse mit Druckluft auf.

Bei einer weiteren Ausführungsform umfasst die Anordnung einen Transferwagen, der dazu eingerichtet ist, einen Transporttiegel zwischen einer Einstellposition und einer Befüllposition relativ zur Station zu verfahren, wobei die Befüllposition so angeordnet ist, dass die Andockkammer an eine Einfüllöffnung eines Transporttiegels andockbar ist, wenn sich dieser in der Befüllposition befindet.

Vorzugsweise weist die Anordnung einen Linearantrieb zur linearen Bewegung des Transferwagens zwischen der Einstellposition und der Befüllposition auf. Weiterhin weist der Transferwagen vorzugsweise eine Plattform auf, auf die der Transporttiegel zur Bewegung von der Einstellposition in die Befüllposition und umgekehrt gestellt werden kann.

Die Einstellposition ist vorzugsweise derart angeordnet, dass der Transporttiegel in der Einstellposition in einfacher Weise, insbesondere ohne Behinderung durch die Station, auf dem Transferwagen angeordnet bzw. von diesem herunter gehoben werden kann. Auf diese Weise kann das Einstellen und Entnehmen des Transporttiegels räumlich von der Befüllposition getrennt werden, so dass es beim Einstellen und Entnehmen des Transporttiegels beispielsweise nicht zu Kollisionen mit der Station kommen kann.

Vorzugsweise weist der Transferwagen ein oder mehrere Positionierungselemente auf, die dazu eingerichtet sind, einen Transporttiegel auf dem Transferwagen in einer vorgegebenen Position zu positionieren. Insbesondere kann der Transferwagen Aufnahmen zur Aufnahme von Füßen eines Transporttiegels aufweisen, so dass ein Transporttiegel zuverlässig in einer vorgegebenen Position auf dem Transferwagen positionierbar ist.

Die Anordnung weist vorzugsweise einen Sensor auf, der dazu eingerichtet ist festzustellen, ob der Transferwagen in der Befüllposition positioniert ist, sowie Mittel zur Steuerung eines Linearantriebs zur linearen Bewegung des Transferwagens von der Einstellposition in die Befüllposition abhängig vom Signal dieses Sensors. Bei dem Sensor kann es sich um einen Endschalter wie zum Beispiel um einen Kontaktschalter oder um eine Lichtschranke handeln. Auf diese Weise kann der Transferwagen zuverlässig in die Befüllposition verfahren werden.

Vorzugsweise ist die Anordnung dazu eingerichtet, dass ein Transporttiegel derart in einer vorgegebenen Position auf dem Transferwagen positionierbar und durch eine lineare Bewegung des Transferwagens in die Befüllposition verfahrbar ist, so dass eine Einfüllöffnung des Transporttiegels an einer vorgegebenen Position unterhalb der Andockkammer positionierbar und die Andockkammer durch eine vertikale Bewegung an die Einfüllöffnung des Transporttiegels andockbar ist. Zu diesem Zweck weist der Transferwagen vorzugsweise wie zuvor beschrieben ein oder mehrere Positionierungselemente auf und die Anordnung weist vorzugsweise wie zuvor beschrieben einen Sensor zur zuverlässigen Positionierung des Transferwagens in der Befüllposition auf. Insbesondere ist die Andockkammer in horizontaler Richtung derart zur Befüllposition des Transferwagens ausgerichtet, dass zum Andocken der Andockkammer an der Einfüllöffnung des Transporttiegels kein Verschwenken der Andockkammer erforderlich ist.

Es wurde erkannt, dass durch eine rein lineare Bewegung und damit einachsige Bewegung des Transporttiegels in die Befüllposition und durch eine rein vertikale Bewegung und damit ebenfalls einachsige Bewegung der Andockkammer zum Andocken an die Einfüllöffnung des Transporttiegels der Andockvorgang zuverlässiger und schneller durchgeführt werden kann. Dadurch kann schnell und zuverlässig eine dichte Verbindung zwischen der Andockkammer und dem Transporttiegel hergestellt werden, so dass die Metallschmelze zügig in den Transporttiegel überführbar ist. Insbesondere kann verhindert werden, dass der Fluss der Metallschmelze wegen einer undichten Verbindung zwischen Andockkammer und Transporttiegel im Saugrohr verlangsamt oder zum Stehen kommt und die Metallschmelze im Saugrohr erstarrt.

Bei einer weiteren Ausführungsform umfasst die Anordnung eine Wägeeinrichtung, die zum Wiegen eines Transporttiegels während der Überführung einer Metallschmelze aus dem Schmelzofen in den Transporttiegel angeordnet und eingerichtet ist. Auf diese Weise kann die Menge der überführten Metallschmelze während des Überführens überwacht und so genau dosiert werden. Die Wägeeinrichtung kann beispielsweise in den zuvor beschriebenen Transferwagen integriert werden.

Vorzugsweise umfasst die Anordnung eine Steuereinrichtung, die dazu eingerichtet ist, die Anordnung, insbesondere die Absaugeinrichtung, abhängig von einem Signal der Wägeeinrichtung zu steuern, insbesondere derart, dass eine vorgegebene oder vorgebbare Menge an Metallschmelze in den Transporttiegel überführt wird. Wird beispielweise eine gewünschte Menge der Metallschmelze in die Steuereinrichtung (z.B. in Tonnen) eingegeben, so ist die Steuereinrichtung vorzugsweise dazu eingerichtet, die Absaugeinrichtung abzuschalten, wenn die gewünschte Menge der Metallschmelze in den Transporttiegel überführt wurde. Auf diese Weise können bedarfsmäßig gewünschte Mengen an Metallschmelze in den Transporttiegel abgefüllt werden.

Bei einer weiteren Ausführungsform, insbesondere einer Ausführungsform des Systems, ist der Transporttiegel zur Erzeugung eines Unterdrucks im Innenraum des Transporttiegels durch die Einfüllöffnung geeignet, insbesondere für eine Druckdifferenz zum Umgebungsdruck von mindestens 0,3 bar, vorzugsweise mindestens 0,6 bar. Bei einem angenommenen Umgebungsdruck von 1 bar entspräche diese einem Druck von 0,7 bar oder weniger bzw. einem Druck von 0,4 bar oder weniger.

Zu diesem Zweck ist der Transporttiegel vorzugsweise einerseits strukturell für einen derartigen Differenzdruck zum Umgebungsdruck ausgebildet, so dass er den bei einem solchen Differenzdruck auftretenden Kräften widerstehen kann. Andererseits ist der Transporttiegel vorzugsweise entsprechend dicht ausgebildet, so dass durch Absaugen eines Gases durch die Einfüllöffnung ein entsprechender Unterdruck im Transporttiegel herstellbar ist. Weist der Transporttiegel neben der Einfüllöffnung noch weitere Öffnungen auf, so sind diese insbesondere dicht verschließbar, damit die zuvor genannten Unterdrücke erreicht werden können. Vorzugsweise weist der Transporttiegel zu diesem Zweck mindestens einen mit dem Transporttiegel verbundenen Deckel zum Verschließen einer derartigen Öffnung auf.

Vorzugsweise umfasst der Transporttiegel einen Deckel, der zum Verschließen der Einfüllöffnung ausgebildet ist, so dass die Einfüllöffnung während des Transports des Transporttiegels verschlossen werden kann. Vorzugsweise weist der Deckel einen Stutzen zur Belüftung des Innenraums auf, so dass Unter- und Überdrücke im Transporttiegel beim Transport oder beim Entleeren des Transporttiegels ausgeglichen werden können.

Bei einer weiteren Ausführungsform, insbesondere einer Ausführungsform des Systems, weist der Transporttiegel eine Abfüllschnauze zum Ausgießen von Metallschmelze aus dem Transporttiegel sowie einen Deckel zum Verschließen der Abfüllschnauze auf. Auf diese Weise lässt sich eine Metallschmelze durch Ankippen des Transporttiegels dosiert aus der Abfüllschnauze ausgießen, beispielsweise in eine Gussform. Die Abfüllschnauze ist vorzugsweise mit einem Deckel verschließbar, so dass im Transporttiegel ein Unterdruck durch Absaugen eines Gases aus der Einfüllöffnung erzeugbar ist. Der Deckel kann beispielsweise drehgelenkig mit dem Transporttiegel verbunden sein, so dass die Abfüllschnauze durch Schwenken des Deckels einfach und sicher verschlossen werden kann.

Bei einer weiteren Ausführungsform, insbesondere einer Ausführungsform des Verfahrens, wird in der Andockkammer und/oder im Transporttiegel ein Unterdruck mit einer Druckdifferenz zum Umgebungsdruck im Bereich von 0,3 - 0,8 bar, vorzugsweise 0,6 - 0,7 bar erzeugt. Bei einem angenommenen Umgebungsdruck von 1 bar entspricht dies einem Druck im Transporttiegel von beispielsweise 0,7 - 0,2 bar bzw. 0,4 - 0,3 bar.

Es hat sich gezeigt, dass die Metallschmelze bei einer Druckdifferenz zum Umgebungsdruck von weniger als 0,3 bar nicht mehr zuverlässig in den Transporttiegel überführt werden kann. Für eine Druckdifferenz zum Umgebungsdruck von mehr als 0,8 bar ist ein deutlich erhöhter technischer Aufwand erforderlich. Weiterhin kann bei einer derart großen Druckdifferenz die Fließgeschwindigkeit der Metallschmelze so groß sein, dass eine genaue Dosierung der Menge der überführten Metallschmelze schwierig ist. Optimale Ergebnisse für eine zuverlässige und gut dosierbare Überführung der Metallschmelze in den Transporttiegel wurden bei Druckdifferenzen im Bereich von 0,6 - 0,7 bar erreicht.

Im Folgenden werden weitere Ausführungsformen 1 - 13 der Station, weitere Ausführungsformen 14 - 16 der Anordnung, weitere Ausführungsformen 17 - 19 des Systems und weitere Ausführungsformen 20 - 21 des Verfahrens beschrieben. Die Ausführungsformen 1 - 21 sind mit den zuvor beschriebenen Ausführungsformen kombinierbar.
1. Station zur Überführung einer Metallschmelze aus einem Schmelzofen in einen Transporttiegel, mit einer Andockkammer, die eine Andocköffnung aufweist und dazu eingerichtet ist, mit der Andocköffnung an eine Einfüllöffnung eines Transporttiegels angedockt zu werden, mit einer Absaugeinrichtung, die zum Absaugen eines Gases aus der Andockkammer und/oder aus einem an die Andockkammer angedockten Transporttiegel eingerichtet ist, und mit einem Saugrohr, das einen zwischen einer Einlassöffnung und einer Auslassöffnung verlaufenden Saugkanal aufweist, wobei die Einlassöffnung außerhalb der Andockkammer angeordnet ist und die Auslassöffnung derart angeordnet ist, dass eine durch den Saugkanal fließende und aus der Auslassöffnung austretende Metallschmelze durch die Andocköffnung gelangt.
2. Station nach Ausführungsform 1, wobei die Station ein stationäres Gerüst aufweist, mit dem die Andockkammer, die Absaugeinrichtung und/oder das Saugrohr jeweils unmittelbar oder mittelbar verbunden sind.
3. Station nach Ausführungsform 1 oder 2, wobei die Station eine Hubeinrichtung umfasst, die zur im Wesentlichen vertikalen Bewegung der Andockkammer und/oder des Saugrohrs eingerichtet ist.
4. Station nach einer der Ausführungsformen 1 bis 3, wobei die Andockkammer federnd gelagert ist.
5. Station nach einer der Ausführungsformen 1 bis 4, wobei die Station einen Drehantrieb zum Verschwenken der Einlassöffnung des Saugrohrs aufweist.
6. Station nach einer der Ausführungsformen 1 bis 5, wobei die Station einen mit der Andockkammer verbundenen Füllstandsensor aufweist, der dazu eingerichtet ist, das Überschreiten eines vorgegebenen Füllniveaus innerhalb eines mit einer Einfüllöffnung an die Andocköffnung angedockten Transporttiegels zu detektieren.
7. Station nach einer der Ausführungsformen 1 bis 6, wobei die zum Absaugen eines Gases aus der Andockkammer eingerichtete Absaugeinrichtung eine Venturi-Düse umfasst.
8. Station nach einer der Ausführungsformen 1 bis 7,
   dadurch gekennzeichnet,
   dass die Andockkammer ein Ansatzrohr aufweist, welches zum Anschluss des Saugrohrs an die Andockkammer eingerichtet ist, insbesondere mittels einer Flanschverbindung.
9. Station nach Ausführungsform 8,
   dadurch gekennzeichnet,
   dass das Saugrohr einen vorzugsweise austauschbaren Abschnitt (178a) aufweist, der durch das Ansatzrohr in die Andockkammer hineinführbar ist.
10. Station nach einer der Ausführungsformen 1 bis 9,
   dadurch gekennzeichnet,
   dass die Absaugeinrichtung einen Ansaugkanal mit einer Ansaugöffnung zum Ansaugen eines Gases aufweist, wobei die Ansaugöffnung in der Andockkammer angeordnet ist, und zwar vorzugsweise oberhalb der Andocköffnung, insbesondere mindestens 5 cm, bevorzugt mindestens 10 cm oberhalb der Andocköffnung.
11. Station nach einer der Ausführungsformen 1 bis 10,
   dadurch gekennzeichnet,
   dass die Auslassöffnung oberhalb der Andocköffnung angeordnet ist, und zwar vorzugsweise mindestens 5 cm, insbesondere mindestens 10 cm oberhalb der Andocköffnung.
12. Station nach einer der Ausführungsformen 1 bis 11,
   dadurch gekennzeichnet,
   dass die Station einen Sensor aufweist, vorzugsweise innerhalb der Andockkammer, wobei der Sensor dazu eingerichtet ist festzustellen, ob eine Einfüllöffnung eines Transporttiegels unterhalb der Andockkammer angeordnet ist und/oder ob die Einfüllöffnung des Transporttiegels zum Andocken der Andockkammer freiliegt.
13. Anordnung mit einem Schmelzofen, der eine Entnahmeöffnung zur Entnahme einer Metallschmelze aufweist, und mit einer Station nach einer der Ausführungsformen 1 bis 12, wobei die Station so eingerichtet ist, dass die Einlassöffnung des Saugrohrs durch die Entnahmeöffnung des Schmelzofens in eine Metallschmelze im Schmelzofen eintauchbar ist.
14. Anordnung nach Ausführungsform 13, umfassend einen Transferwagen, der dazu eingerichtet ist, einen Transporttiegel zwischen einer Einstellposition und einer Befüllposition relativ zur Station zu verfahren, wobei die Befüllposition so angeordnet ist, dass die Andockkammer an eine Einfüllöffnung eines Transporttiegels andockbar ist, wenn sich dieser in der Befüllposition befindet.
15. Anordnung nach Ausführungsform 13 oder 14, umfassend eine Wägeeinrichtung, die zum Wiegen eines Transporttiegels während der Überführung einer Metallschmelze aus dem Schmelzofen in den Transporttiegel angeordnet und eingerichtet ist.
16. Anordnung nach einer der Ausführungsformen 13 bis 15,
   dadurch gekennzeichnet,
   dass die Station eine Hubeinrichtung umfasst, die zur im Wesentlichen vertikalen Bewegung der Andockkammer und/oder des Saugrohrs eingerichtet ist, und
   dass die Anordnung dazu eingerichtet, dass ein Transporttiegel derart in einer vorgegebenen Position auf dem Transferwagen positionierbar und durch eine lineare Bewegung des Transferwagens in die Befüllposition verfahrbar ist, so dass eine Einfüllöffnung des Transporttiegels an einer vorgegebenen Position unterhalb der Andockkammer positionierbar und die Andockkammer durch eine vertikale Bewegung an die Einfüllöffnung des Transporttiegels andockbar ist.
17. System umfassend eine Anordnung nach einer der Ausführungsformen 13 bis 16 und einen Transporttiegel mit einer Einfüllöffnung, wobei die Andockkammer dazu eingerichtet ist, mit der Andocköffnung an die Einfüllöffnung des Transporttiegels angedockt zu werden.
18. System nach Ausführungsform 17, wobei der Transporttiegel zur Erzeugung eines Unterdrucks im Innenraum des Transporttiegels durch die Einfüllöffnung geeignet ist, insbesondere für eine Druckdifferenz zum Umgebungsdruck von mindestens 0,3 bar, vorzugsweise mindestens 0,6 bar.
19. System nach Ausführungsform 17 oder 18, wobei der Transporttiegel eine Abfüllschnauze zum Ausgießen von Metallschmelze aus dem Transporttiegel sowie einen Deckel zum dichten Verschließen der Abfüllschnauze aufweist.
20. Verfahren zur Überführung einer Metallschmelze aus einem Schmelzofen in einen Transporttiegel mittels einer Anordnung nach einer der Ausführungsformen 13 bis 16 mit folgenden Schritten:
   - Bereitstellen eines Transporttiegels in einer Befüllposition, insbesondere eines Transporttiegels gemäß eines Systems nach einer der Ausführungsformen 17 bis 19,
   - Andocken der Andockkammer mit der Andocköffnung an eine Einfüllöffnung des Transporttiegels,
   - Positionieren der Einlassöffnung des Saugrohres in einer Metallschmelze im Schmelzofen,
   - Aktivieren der Absaugeinrichtung, so dass in der Andockkammer und/oder im Transporttiegel ein Unterdruck gegenüber dem Umgebungsdruck erzeugt wird, so dass die Metallschmelze durch die Einlassöffnung des Saugrohres eingesaugt und durch den Saugkanal in den Transporttiegel gelangt.
21. Verfahren nach Ausführungsform 20, wobei in der Andockkammer und/oder im Transporttiegel ein Unterdruck mit einer Druckdifferenz zum Umgebungsdruck im Bereich von 0,3 bis 0,8 bar, vorzugsweise 0,6 bis 0,7 bar, erzeugt wird.

Weitere Merkmale und Vorteile der Station, der Anordnung, des Systems und des Verfahrens werden nachfolgend anhand von Ausführungsbeispielen beschrieben, wobei auf die beigefügten Zeichnungen Bezug genommen wird.

In den Zeichnungen zeigen
- Figur 1: ein Ausführungsbeispiel einer Station zur Überführung einer Metallschmelze aus einem Schmelzofen in einen Transporttiegel, einer zugehörigen Anordnung mit einem Schmelzofen und eines zugehörigen Systems mit einem Transporttiegel in seitlicher Teilschnittansicht,
- Figur 2: das Ausführungsbeispiel aus Fig. 1 in vorderer Teilschnittansicht,
- Figur 3: einen vergrößerten Ausschnitt aus Fig. 1 zu einem anderen Verfahrenszeitpunkt,
- Figur 4: eine schematische Darstellung der Venturi-Düse aus Fig. 1,
- Figur 5: den Transporttiegel aus Fig. 1 in seitlicher Schnittansicht und
- Figur 6: die Station aus Fig. 1 in einer Reparatur- und Wartungsposition in vorderer Teilschnittansicht.

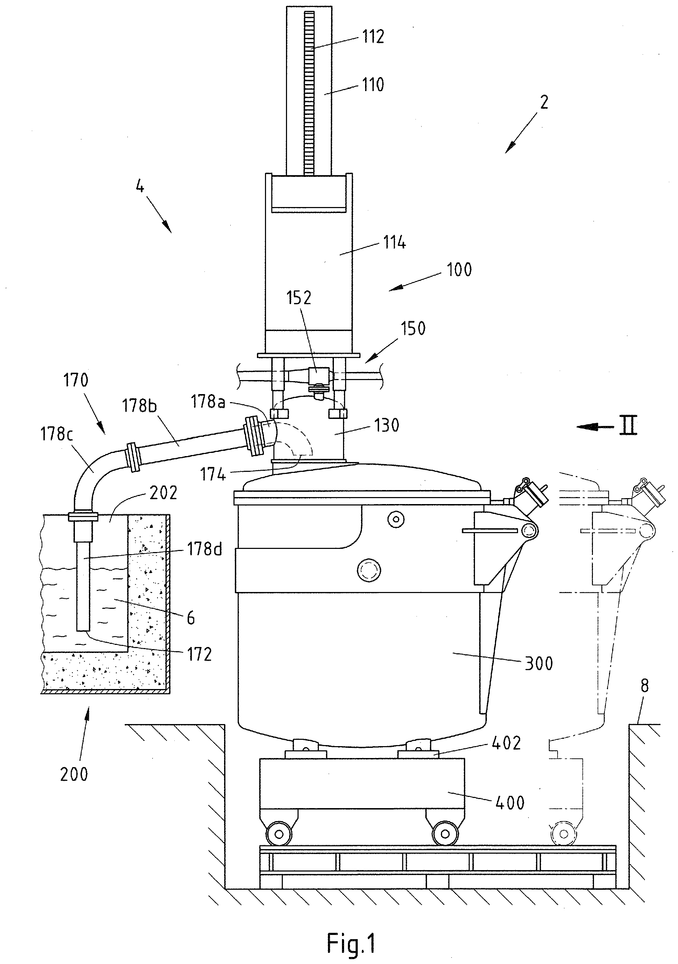

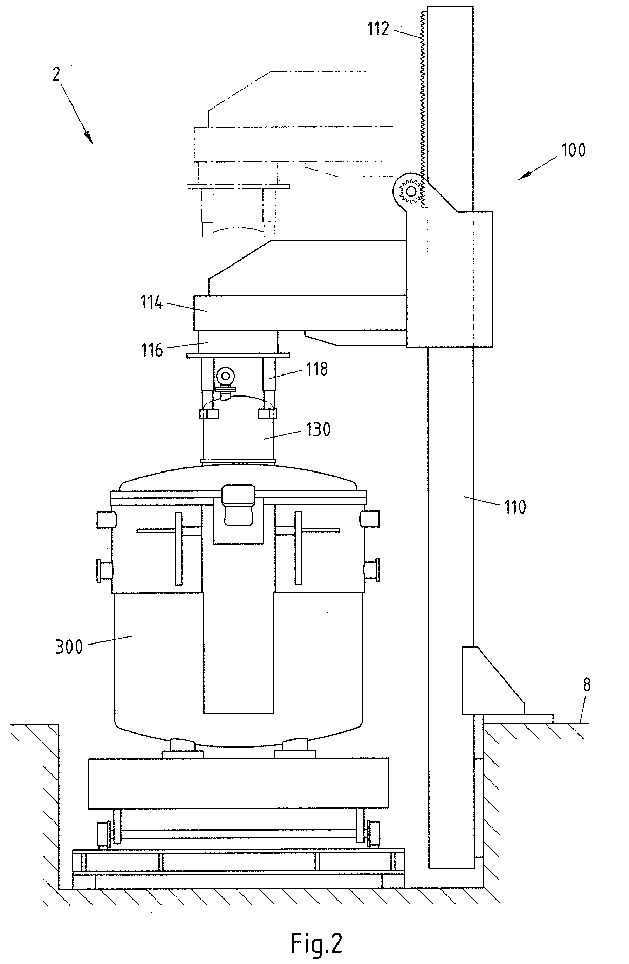

Die Figuren 1 und 2 zeigen ein System 2, das eine Anordnung 4 mit einer Station 100 und einen Schmelzofen 200, einen Transporttiegel 300 und einen Transferwagen 400 zur Bewegung des Transporttiegels 300 zwischen einer Einstellposition (strichpunktiert in Fig. 1) und einer Befüllposition (durchgezogen in Fig.1) umfasst. Figur 1 zeigt eine seitliche und Figur 2 eine vordere Teilschnittansicht aus der in Figur 1 mit "II" bezeichneten Richtung.

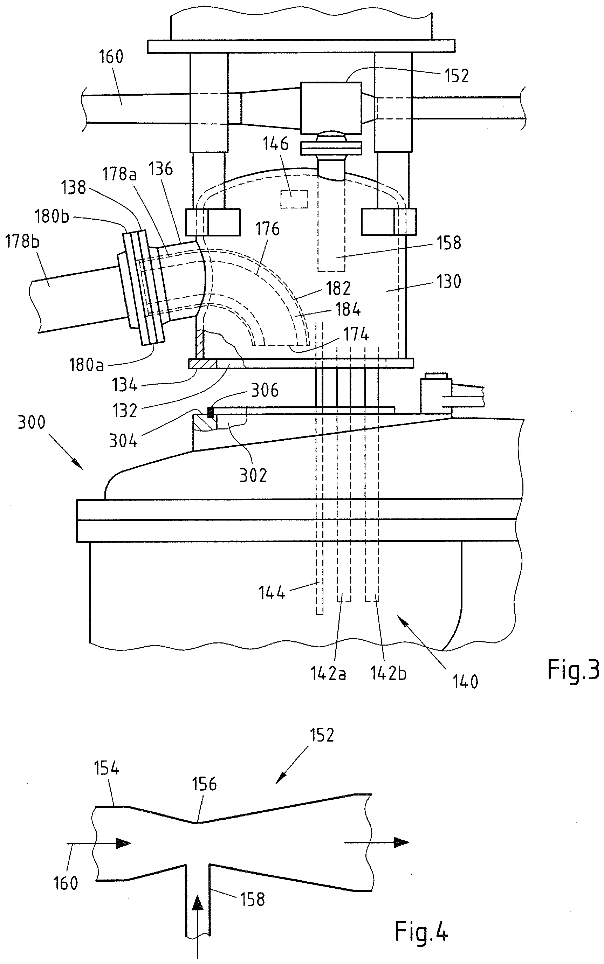

In den Figuren 1 und 2 ist die Andockkammer 130 an den Transporttiegel 300 angedockt. Demgegenüber zeigt Figur 3 einen vergrößerten und detaillierteren Ausschnitt aus Figur 1 zu einem Verfahrenszeitpunkt, kurz bevor die Andockkammer 130 an den Transporttiegel 300 angedockt wird, d.h. zu dem die Andockkammer 130 und der Transporttiegel 300 noch zueinander beabstandet sind.

Die Station 100 zur Überführung einer Metallschmelze 6 aus dem Schmelzofen 200 in den Transporttiegel 300 umfasst insbesondere ein ortsfestes Gerüst 110, eine Andockkammer 130, eine zum Absaugen eines Gases aus der Andockkammer 130 und/oder aus dem Transporttiegel 300 eingerichtete Absaugeinrichtung 150 sowie ein Saugrohr 170 mit einem zwischen einer Einlassöffnung 172 und einer Auslassöffnung 174 verlaufenden Saugkanal 176.

Das Gerüst 110 ist fest mit einem Fundament 8 verbunden und weist eine Hubeinrichtung 112 in Form eines Linearantriebs auf, mit dem ein Ausleger 114 in vertikaler Richtung zwischen einer oberen Position (strichpunktiert in Fig. 2) und einer unteren Position (durchgezogenen in Fig. 2) verfahren werden kann. Die Andockkammer 130 ist über einen Drehantrieb 116 und vier Federn 118 an dem Ausleger 114 und so mittelbar auch am Gerüst 110 befestigt. Durch den Drehantrieb 116 kann die Andockkammer 130 um eine im Wesentlichen vertikale Achse gedreht werden. Weiterhin ist die Andockkammer 130 durch die Federn 118 in vertikaler Richtung federnd gelagert.

Die Andockkammer 130 hat die Form eines Vakuumbehälters und ist einerseits für die bei einem Unterdruck in der Andockkammer 130 auftretenden Kräfte ausgebildet und verfügt andererseits über eine Dichtheit, die die Erzeugung und Aufrechterhaltung eines Unterdrucks in der Andockkammer 130 erlaubt.

An ihrer Unterseite weist die Andockkammer 130 eine Andocköffnung 132 auf, mit der die Andockkammer 130 an eine Einfüllöffnung 302 des Transporttiegels 300 angedockt werden kann, wenn sich dieser in der Befüllposition befindet. Die Andockkammer 130 weist zu diesem Zweck einen die Andocköffnung 132 umgebenden flanschartigen Rand 134 mit einer glatten Oberfläche auf, der zusammen mit einem die Einfüllöffnung 302 des Transporttiegels 300 umgebenden flanschartigen Rand 304 und einer darin angeordneten Dichtung 306 eine gasdichte Verbindung zwischen der Andocköffnung 132 und der Einfüllöffnung 302 bzw. zwischen der Andockkammer 130 und dem Transporttiegel 300 ermöglicht (Fig. 3).

Die Dichtung 306 kann beispielsweise mittels einer Schwalbenschwanzverbindung sicher an einer festen Position mit dem flanschartigen Rand 304 verbunden werden. Weiterhin weist die Andockkammer 130 ein seitlich angeschweißtes Ansatzrohr 136 mit einem Flansch 138 auf, welches zum Anschluss des Saugrohrs 170 dient.

Die Andockkammer 130 weist auch noch einen Füllstandsensor 140 zur Kontrolle des Füllstands von Metallschmelze in einem an die Andockkammer 130 angedockten Transporttiegel 300 auf (Fig. 3). Der Füllstandsensor 140 umfasst zwei aus der Andocköffnung 132 herausragende Elektroden 142a-b, die mit einer Sensorelektronik (nicht dargestellt) verbunden sind, wobei die Sensorelektronik dazu eingerichtet ist, einen Kurzschluss zwischen den Elektroden 142a-b zu detektieren. Auf diese Weise kann mit dem Füllstandsensor 140 der Zeitpunkt detektiert werden, an dem die Metallschmelze beim Befüllen eines Transporttiegels 300 die sich in den Transporttiegel 300 erstreckenden Elektroden 142a-b erreicht und dadurch kurzschließt. Der Füllstandsensor 140 kann beispielsweise mit einer Notabschaltung der Absaugeinrichtung 150 gekoppelt sein, um ein Überfüllen des Transporttiegels 300 zu verhindern.

Um einen unbeabsichtigten Kurzschluss der Elektroden 142a-b durch aus der Auslassöffnung 174 des Saugrohrs 170 austretende Metallschmelze zu verhindern, kann die Absaugkammer eine Schutzplatte 144 aufweisen, die zwischen den Elektroden 142a-b und der Auslassöffnung 174 des Saugrohrs 170 angeordnet ist. Die Schutzplatte 144 kann beispielsweise aus Stahl und/oder Feuerfestbeton bestehen.

Die Absaugeinrichtung 150 umfasst eine Venturi-Düse 152, deren schematischer Aufbau in Figur 4 dargestellt ist. Die Venturi-Düse 152 umfasst einen Strömungskanal 154 mit einer Querschnittsverengung 156, in deren Bereich ein Ansaugkanal 158 in den Strömungskanal 154 mündet. Der Strömungskanal 154 ist an eine Druckluftzufuhr 160 angeschlossen, mit der Luft durch den Strömungskanal 154 geleitet werden kann. Durch die Querschnittsverengung 156 kommt es zu einer Geschwindigkeitserhöhung der durch den Strömungskanal 154 strömenden Luft und gleichzeitig zu einer Druckerniedrigung, so dass Gas aus dem Ansaugkanal 158 angesaugt wird. Der Ansaugkanal 158 ist so an die Andockkammer 130 angeschlossen, dass ein Gas aus der Andockkammer 130 und/oder aus dem Transporttiegel 300 abgesaugt werden kann.

Das Saugrohr 170 verläuft von der außerhalb der Andockkammer 130 angeordneten Einlassöffnung 172 durch das Ansatzrohr 136 in die Andockkammer 130 hinein bis zu einer Auslassöffnung 174. Die Auslassöffnung 174 ist in Fig. 1 innerhalb der Andockkammer 130 angeordnet. Sie kann jedoch auch in der Ebene der Andocköffnung 132 oder außerhalb der Andockkammer 130, insbesondere unterhalb der Andocköffnung 132 angeordnet sein, wobei das Saugrohr 170 sich durch die Andocköffnung 132 erstreckt. Die Anordnung der Auslassöffnung 174 innerhalb der Andockkammer 130 und somit oberhalb der Ebene der Andocköffnung 132 ist allerdings bevorzugt, da auf diese Weise Krätzebildung am Saugrohr 170 verhindert und ein vollständiges Freilaufen des Saugrohres 170 von der Metallschmelze gewährleistet werden kann.

In Figur 1 wird das Saugrohr 170 durch mehrere aneinander geflanschte Rohrabschnitte 178a-d gebildet. Alternativ kann das Saugrohr 170 aber auch einteilig ausgebildet werden.

Der Rohrabschnitt 178a ist so in das Ansatzrohr 136 hineingeschoben, dass die Auslassöffnung 174 innerhalb der Andockkammer 130 angeordnet ist und im Wesentlichen nach unten weist. Der Flansch 180a des Rohrabschnitts 178a ist zwischen dem Flansch 138 des Ansatzrohres 136 und einem Flansch 180b des Rohrabschnitts 178b angeordnet und mit diesen verbunden, insbesondere verschraubt. Zur besseren Abdichtung der Verbindung des Ansatzrohrs 136 und der beiden Rohrabschnitte 178a-b können zwischen dem Flansch 180a und dem Flansch 180b bzw. zwischen dem Flansch 180a und dem Flansch 138 jeweils eine Dichtung oder ein anderes Dichtmittel angeordnet sein. Durch diesen Aufbau der Andockkammer 130 und des Saugrohrs 170 kann das Saugrohr auf einfache Weise an die Andockkammer 130 montiert bzw. von dieser demontiert werden, beispielsweise zu Reparatur- oder Instandhaltungszwecken.

Der Rohrabschnitt 178d im Bereich der Einlassöffnung 172 des Saugrohres 170 verläuft im Wesentlichen in vertikaler Richtung, so dass die Einlassöffnung 172 durch vertikales Verfahren der Andockkammer 130 und des damit fest verbundenen Saugrohrs 170 durch eine Entnahmeöffnung 202 des Schmelzofens 200 in die Metallschmelze 6 im Schmelzofen 200 eingetaucht werden kann. Die Rohrabschnitte 178b-d können beispielsweise im Wesentlichen denselben Aussen- und/oder im Wesentlichen denselben Innendurchmesser aufweisen.

Die Station 100 und/oder der Transferwagen 400 sind vorzugsweise so positioniert und eingerichtet, dass die Metallschmelze 6 zur Überführung vom Schmelzofen 200 in den Transporttiegel 300 um eine Höhe von maximal 50 cm angehoben werden muss. Insbesondere ist die höchste Stelle des Saugrohrs 170 bei angedockter Andockkammer 130 maximal 50 cm oberhalb der Füllhöhe der Metallschmelze im Schmelzofen 200 positioniert. Auf diese Weise kann eine schnellere Überführung der Metallschmelze 6 in den Transporttiegel 300 bei geringerer Druckdifferenz zwischen dem Innenraum des Transporttiegels 300 und der umgebenden Atmosphäre erreicht werden.

Das Saugrohr 170 bzw. einzelne Rohrabschnitte 178a-d des Saugrohres 170 können beispielsweise aus einer Gusslegierung, beispielsweise aus Gusseisen wie z.B. Hämatit-Roheisen, bestehen. Im Bereich der Einlassöffnung 172 kann das Saugrohr 170 ebenfalls aus einer Gusslegierung oder auch aus einer Keramik bestehen. Zur Erhöhung der Standzeit kann das Saugrohr 170 teilweise oder vollständig mit Feuerfestmaterial, beispielsweise mit Feuerfestbeton oder Keramik ausgekleidet sein. Beispielsweise können das Saugrohr 170 oder eines oder mehrere der Rohrabschnitte 178a-d einen Außenmantel 182 aus Metall und eine Innenschicht 184 aus Feuerfestmaterial aufweisen.

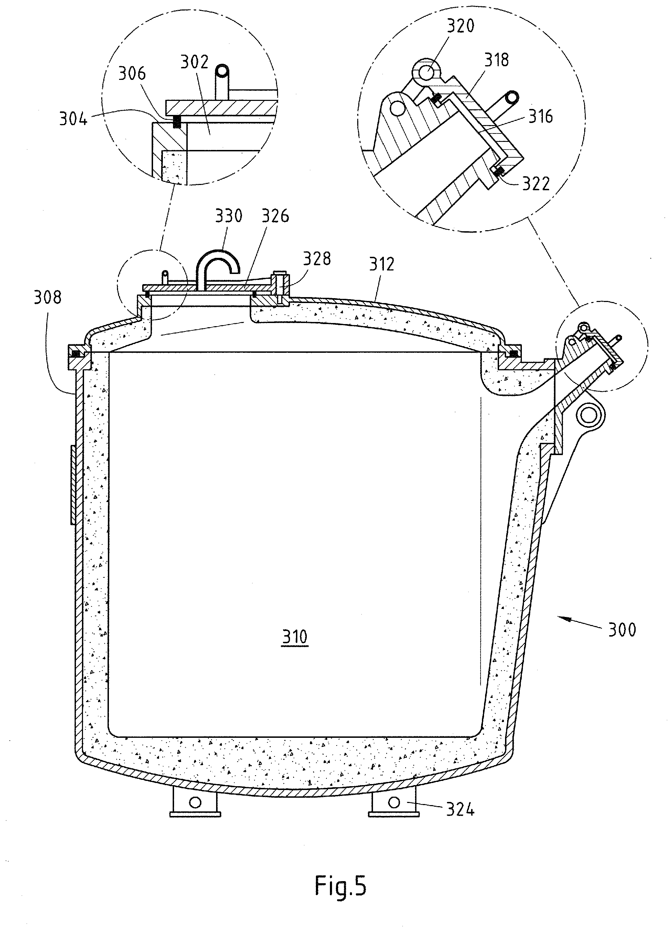

Fig. 5 zeigt eine Schnittdarstellung des Transporttiegels 300. Der Transporttiegel 300 weist ein Tiegelgefäß 308 zur Aufnahme der Metallschmelze 6 in seinem Innenraum 310 sowie einen Tiegeldeckel 312 auf, der gasdicht mit dem Tiegelgefäß 308 verbunden ist. Die Einfüllöffnung 302 ist im Tiegeldeckel 312 angeordnet. Weiterhin weist das Tiegelgefäß 308 noch eine Abfüllschnauze 314, durch deren Öffnung 316 Metallschmelze aus dem Transporttiegel 300 ausgegossen werden kann, indem der Transporttiegel angekippt wird.

Der Transporttiegel 300 weist weiterhin einen Deckel 318 zum im Wesentlichen gasdichten Verschließen der Öffnung 316 der Abfüllschnauze 314 auf. Der Deckel 318 ist in Fig. 5 über ein Scharnier 320 mit dem Tiegelgefäß 308 verbunden und kann somit durch Verschwenken über die Öffnung 316 gelegt werden. Für eine im Wesentlichen gasdichte Abdichtung ist im Deckel 318 eine Dichtung 322 vorgesehen.

Der Transporttiegel 300 ist dazu ausgelegt, dass durch Absaugen eines Gases durch die Einfüllöffnung 302 ein Unterdruck im Innenraum 310 des Transporttiegels 300 hergestellt werden kann. Zu diesem Zweck ist der Transporttiegel 300 derart abgedichtet, dass der Innenraum 310 bei geschlossenem Deckel 318 abgesehen von der Einfüllöffnung 302 gasdicht verschlossen ist. Insbesondere sind etwaige Nähte des Tiegelgefäßes 308 und/oder des Deckels 318 vorzugsweise durchgehend verschweißt und der Transporttiegel 300 weist auch keine anderen Undichtigkeiten auf. Vorzugsweise ist der Transporttiegel 300 für einen Unterdruck gegenüber dem Umgebungsdruck von mindestens 0,3 bar, bevorzugt mindestens 0,6 bar ausgelegt.

An der Unterseite weist der Transporttiegel 300 Füße 324 zum Aufstellen des Transporttiegels auf. Der Transferwagen 400 in Fig. 1 weist an die Füße 324 angepasste Aufnahmen 402 auf, in die die Füße 324 des Transporttiegels 300 eingestellt werden können, so dass der Transporttiegel mit dem Transferwagen 400 sicher zwischen der Einstellposition (strichpunktiert in Fig. 1) und der Befüllposition (durchgezogen in Fig. 1) verfahren werden kann. Durch die Aufnahmen 402 kann der Transporttiegel 300 zuverlässig in einer vorgegebenen Position auf dem Transferwagen 400 positioniert werden.

Für den Transport des Transporttiegels 300 nach dem Befüllen mit Metallschmelze weist der Transporttiegel 300 einen Deckel 326 zum Verschließen der Einfüllöffnung 302. Der Deckel 326 ist über ein Gelenk 328 mit dem Tiegeldeckel 312 verbunden und kann somit nach dem Befüllen über die Einfüllöffnung 302 geklappt werden. Auf diese Weise kann verhindert werden, dass während des Transports des Transporttiegels 300 Metallschmelze aus der Einfüllöffnung 302 herausspritzt oder Verunreinigungen durch die Einfüllöffnung 302 in den Innenraum 310 des Transporttiegels 300 gelangen.

Im Deckel 326 ist ein Belüftungsstutzen 330 vorgesehen, durch welchen ein Luftaustausch zwischen dem Innenraum 310 und der Umgebung möglich ist. Auf diese Weise kann bei geschlossenem Deckel 326 ein unerwünschter Über- oder Unterdruck im Transporttiegel 300 verhindert werden. Insbesondere erleichtert die Belüftung durch den Belüftungsstutzen 330 das Ausgießen von Metallschmelze durch die Abfüllschnauze 314.

Im Folgenden wird nun ein Ausführungsbeispiel des Verfahrens zur Überführung von Metallschmelze 6 aus dem Schmelzofen 200 in den Transporttiegel 300 mittels der Station 100 beschrieben.

Zu Beginn des Verfahrens befindet sich der Transferwagen 400 in der Einstellposition (strichpunktiert in Fig. 1) und der Ausleger 114 befindet sich in der oberen Position (strichpunktiert in Fig. 2).

Der Transporttiegel 300 wird mit den Füßen 322 in die Aufnahmen 402 des Transferwagens 400 gestellt und dann durch Aktivierung eines vorgesehenen Linearantriebs (nicht dargestellt) von der Einstellposition in die Befüllposition (durchgezogen in Fig. 1) verfahren. Um den Transferwagen 400 und damit den Transporttiegel genau in der Befüllposition positionieren zu können, kann ein Endschalter, beispielsweise ein Kontaktschalter oder eine Lichtschranke, vorgesehen sein, mit dem das Erreichen der Befüllposition feststellbar ist und über den zum Beispiel der Linearantrieb gesteuert werden kann. Die Abfüllschnauze 314 des Transporttiegels 300 ist durch den Deckel 318 gasdicht verschlossen und die Einfüllöffnung 302 ist geöffnet.

In oder an der Andockkammer 130 kann optional mit einem dafür vorgesehenen Sensor (146) festgestellt werden, ob die Einfüllöffnung 302 des Transporttiegels 300 unterhalb der Andockkammer 130 angeordnet ist und/oder ob die Einfüllöffnung 302 freiliegt, insbesondere nicht durch den Deckel 326 verschlossen ist, so dass die Andockkammer 130 an die Einfüllöffnung 302 angedockt werden kann.

Sobald der Transporttiegel 300 in der Befüllposition positioniert ist, wird durch Herunterfahren des Auslegers 114 in die untere Position (durchgezogen in Fig. 2) die Andockkammer 130 mit der Andocköffnung 132 an die Einfüllöffnung 302 des Transporttiegels 300 angedockt. Die federnde Lagerung der Andockkammer 130 durch die Federn 118 gewährleistet hierbei eine zuverlässige Positionierung der Andockkammer 130 zur Herstellung einer dichten Verbindung zwischen der Andocköffnung 132 und der Einfüllöffnung 302, insbesondere auch bei gewissen Toleranzen bei der Bewegung des Auslegers 114.

Vorzugsweise ist die Andockkammer 130 gegenüber der Befüllposition horizontal derart angeordnet, dass die Andockkammer 130 zum Andocken an den Transporttiegel 300 lediglich in vertikaler Richtung abgesenkt werden muss. Auf diese Weise kann das Andocken zuverlässig und schnell erfolgen.

Zusammen mit der Andockkammer 130 wird beim Absenken des Auslegers 114 auch das mit der Andockkammer 130 verbundene Saugrohr 170 abgesenkt, so dass die Einlassöffnung 172 durch die Entnahmeöffnung 202 in den Schmelzofen 200 und in die Metallschmelze 6 eintaucht.

Im nächsten Schritt wird die Absaugeinrichtung 150 aktiviert, indem über die Druckluftzufuhr 160 Druckluft in den Strömungskanal 154 der Venturi-Düse 152 eingeblasen wird, so dass Gas aus dem Ansaugkanal 158 und damit aus der mit dem Ansaugkanal 158 verbundenen Andockkammer 130 bzw. aus dem mit der Andockkammer 130 verbundenen Transporttiegel 300 abgesaugt wird.

Da die Einlassöffnung 172 des Saugrohrs 170 in die Metallschmelze 6 eintaucht und das Gasvolumen des Innenraums 310, der Andockkammer 130 und des Saugkanals 176 somit von der Umgebungsatmosphäre getrennt ist, entsteht in der Andockkammer 130 und im Transporttiegel 300 ein Unterdruck. Vorzugsweise wird die Druckluftzufuhr 160 zur Venturi-Düse 152 so eingestellt, dass sich im Transporttiegel 300 eine Druckdifferenz gegenüber dem Umgebungsdruck, d.h. dem Druck der den Transporttiegel 300 umgebenden Atmosphäre, im Bereich von 0,3 bis 0,8 bar, vorzugsweise 0,6 bis 0,7 bar einstellt. Eine Druckdifferenz in diesem Bereich konnte beispielsweise bei einem Druckluftdurchsatz durch die Venturi-Düse 152 von ca. 430 m³/h bei einem Druck der Druckluft aus der Druckluftzufuhr 160 von ca. 5,2 bar erreicht werden.

Durch den Unterdruck im Transporttiegel 300, in der Andockkammer 130 und im Saugkanal 176 wird Metallschmelze 6 durch die Einlassöffnung 172 des Saugrohrs 170 eingesaugt (mit anderen Worten: durch den höheren Umgebungsdruck von außen in das Saugrohr 170 hineingedrückt) und wird durch den Saugkanal 176 in den Transporttiegel 300 geleitet.

Wenn die gewünschte Menge an Metallschmelze 6 in den Transporttiegel 300 überführt ist, wird die Absaugeinrichtung 150 desaktiviert und ggf. belüftet, um den Fluss der Metallschmelze 6 durch den Saugkanal 176 in den Transporttiegel 300 zu stoppen. Der Zeitpunkt, an dem die Absaugeinrichtung 150 zum Erreichen der gewünschten Menge an Metallschmelze 6 desaktiviert werden muss, wird mittels einer in den Transferwagen integrierten Wägeeinrichtung (nicht dargestellt) bestimmt, durch die sich der Füllstand im Transporttiegel 300 bestimmen lässt. auf diese Weise lässt sich die Menge an überführter Metallschmelze genau dosieren.

Um auch bei Ausfall der Wägeeinrichtung ein Überfüllen des Transporttiegels 300 zu vermeiden, ist zudem der Füllstandsensor 140 dazu eingerichtet, die Absaugeinrichtung 150 bei Detektion eines Kurzschlusses der Elektroden 142a-b zu desaktivieren.

Nach der Desaktivierung und ggf. Belüftung der Absaugeinrichtung 150 wird der Ausleger 114 wieder in die obere Position (strichpunktiert in Fig. 2) verfahren, so dass die Andockkammer 130 von dem Transporttiegel 300 abgekoppelt und die Einlassöffnung 172 des Saugrohrs 170 aus der Metallschmelze 6 herausgefahren werden kann.

Anschließend werden der Transporttiegel 300 mit dem Transferwagen 400 von der Befüllposition (durchgezogen in Fig. 1) in die Einstellposition (strichpunktiert in Fig. 1) verfahren und dessen Einfüllöffnung 302 mit dem Deckel 326 verschlossen. Der Transporttiegel 300 kann sodann von dem Transferwagen 400 heruntergehoben und zum Bestimmungsort, beispielsweise zu einer Gießstation, transportiert werden.

Mit dem zuvor beschriebenen Verfahren bzw. der zuvor beschriebenen Station 100, der zuvor beschriebenen Anordnung 4 bzw. dem zuvor beschriebenen System 2 kann damit Metallschmelze 6 von dem Schmelzofen 200 in den Transporttiegel 300 überführt werden, ohne dass mechanisch bewegliche Teile mit der Metallschmelze 6 in Berührung kommen. Weiterhin wird eine genaue Dosierung der überführten Menge an Metallschmelze 6 ermöglicht. Weiterhin wird eine Erhöhung der Arbeitssicherheit erreicht, da die Metallschmelze 6 nicht unkontrolliert umher oder aus dem Transporttiegel 300 herausspritzen kann.

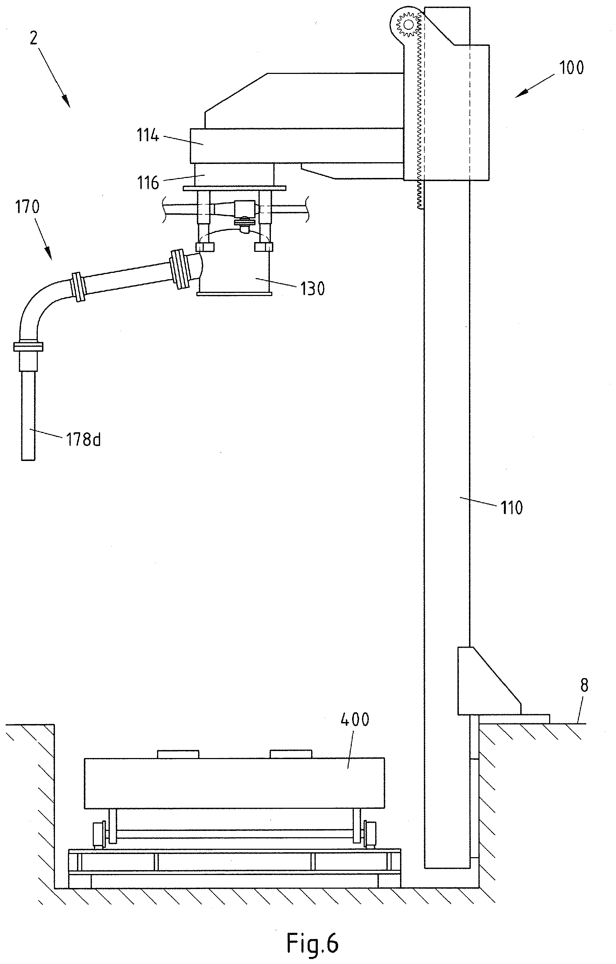

Weiterhin kann die Station 100 während des Betriebs des Schmelzofens 200 gewartet bzw. repariert werden. Zu diesem Zweck kann die Station insbesondere in eine Reparatur- und Wartungsposition gefahren werden, wie sie beispielsweise in Figur 6 dargestellt ist. Hierzu kann insbesondere der Ausleger 114 in der oberen Position positioniert und dann die Andockkammer 130 mit dem Drehantrieb 116 derart gedreht werden, dass das mit der Andockkammer 130 verbundene Saugrohr 170 aus dem Bereich des Schmelzofens 200 herausgeschwenkt wird und außerhalb des Schmelzofens 200 repariert oder teilweise bzw. vollständig ausgewechselt werden kann.

Durch das Andocken einer Andockkammer 130 an den Transporttiegel 300 wird mit dem Innenraum der Andockkammer 130 ein Raum zur Verfügung gestellt, der vor im Transporttiegel 300 umherspritzender Metallschmelze 6 gut geschützt ist, so dass die in der Andockkammer 130 angeordneten Komponenten, beispielsweise das Ende des Saugrohrs mit der Auslassöffnung 174 oder der Sensor 146, vor Metallspritzern geschützt werden.

## Patentansprüche

1. Station (100) zur Überführung einer Metallschmelze (6) aus einem Schmelzofen (200) in einen Transporttiegel (300),
- mit einer Absaugeinrichtung (150) und
- mit einem Saugrohr (170), das einen zwischen einer Einlassöffnung (172) und einer Auslassöffnung (174) verlaufenden Saugkanal (176) aufweist,
**dadurch gekennzeichnet,**
- **dass** die Station eine Andockkammer (130) umfasst, die eine Andocköffnung (132) aufweist und dazu eingerichtet ist, mit der Andocköffnung (132) an eine Einfüllöffnung (302) eines Transporttiegels (300) angedockt zu werden,
- wobei die Absaugeinrichtung (150) zum Absaugen eines Gases aus der Andockkammer (130) und/oder aus einem an die Andockkammer (130) angedockten Transporttiegel (300) eingerichtet ist und
- wobei die Einlassöffnung (172) außerhalb der Andockkammer (130) angeordnet ist und die Auslassöffnung (174) derart angeordnet ist, dass eine durch den Saugkanal (176) fließende und aus der Auslassöffnung (174) austretende Metallschmelze (6) durch die Andocköffnung (132) gelangt.

2. Station nach Anspruch 1,
**dadurch gekennzeichnet,**
**dass** die Andockkammer (130) ein Ansatzrohr (136) aufweist, welches zum Anschließen des Saugrohrs (170) an die Andockkammer (130) eingerichtet ist, insbesondere mittels einer Flanschverbindung.

3. Station nach Anspruch 2,
**dadurch gekennzeichnet,**
**dass** das Saugrohr (170) einen vorzugsweise austauschbaren Abschnitt (178a) aufweist, der durch das Ansatzrohr (136) in die Andockkammer (130) hineinführbar ist.

4. Station nach einem der Ansprüche 1 bis 3,
**dadurch gekennzeichnet,**
**dass** die Absaugeinrichtung (150) einen Ansaugkanal (158) mit einer Ansaugöffnung zum Ansaugen eines Gases aufweist, wobei die Ansaugöffnung in der Andockkammer (130) angeordnet ist, und zwar insbesondere oberhalb der Andocköffnung (132), vorzugsweise mindestens 5 cm, weiter bevorzugt mindestens 10 cm oberhalb der Andocköffnung (132).

5. Station nach einem der Ansprüche 1 bis 4,
**dadurch gekennzeichnet,**
**dass** die Auslassöffnung (174) oberhalb der Andocköffnung (132) angeordnet ist, und zwar vorzugsweise mindestens 5 cm, insbesondere mindestens 10 cm oberhalb der Andocköffnung (132).

6. Station nach einem der Ansprüche 1 bis 5,
**dadurch gekennzeichnet,**
**dass** die Station (100) einen Sensor (146) aufweist, vorzugsweise innerhalb der Andockkammer (130), wobei der Sensor (146) dazu eingerichtet ist festzustellen, ob eine Einfüllöffnung (302) eines Transporttiegels (300) unterhalb der Andockkammer (130) angeordnet ist und/oder ob die Einfüllöffnung (302) des Transporttiegels (300) zum Andocken der Andockkammer (130) freiliegt.

7. Station nach einer der Ansprüche 1 bis 6,
**dadurch gekennzeichnet,**
**dass** die Andockkammer (130) federnd gelagert ist.

8. Station nach einem der Ansprüche 1 bis 7,
**dadurch gekennzeichnet,**
**dass** die zum Absaugen eines Gases aus der Andockkammer (130) eingerichtete Absaugeinrichtung (150) eine Venturi-Düse (152) umfasst.

9. Anordnung (4)
- mit einem Schmelzofen (200), der eine Entnahmeöffnung (202) zur Entnahme einer Metallschmelze (6) aufweist, und
- mit einer Station (100) nach einem der Ansprüche 1 bis 8,
- wobei die Station (100) so eingerichtet ist, dass die Einlassöffnung (172) des Saugrohrs (170) durch die Entnahmeöffnung (202) des Schmelzofens (200) in eine Metallschmelze (6) im Schmelzofen eintauchbar ist.

10. Anordnung nach Anspruch 9,
umfassend einen Transferwagen (400), der dazu eingerichtet ist, einen Transporttiegel (300) zwischen einer Einstellposition und einer Befüllposition relativ zur Station (100) zu verfahren, wobei die Befüllposition so angeordnet ist, dass die Andockkammer (130) an eine Einfüllöffnung (302) eines Transporttiegels (300) andockbar ist, wenn sich dieser in der Befüllposition befindet.

11. Anordnung nach Anspruch 9 oder 10,
umfassend eine Wägeeinrichtung, die zum Wiegen eines Transporttiegels (300) während der Überführung einer Metallschmelze (6) aus dem Schmelzofen (200) in den Transporttiegel (300) angeordnet und eingerichtet ist.

12. Anordnung nach Anspruch 10 oder 11,
**dadurch gekennzeichnet,**
**dass** die Station (100) eine Hubeinrichtung (112) umfasst, die zur im Wesentlichen vertikalen Bewegung der Andockkammer (130) und/oder des Saugrohrs (170) eingerichtet ist, und
**dass** die Anordnung (4) dazu eingerichtet, dass ein Transporttiegel (300) derart in einer vorgegebenen Position auf dem Transferwagen (400) positionierbar und durch eine lineare Bewegung des Transferwagens (400) in die Befüllposition verfahrbar ist, so dass eine Einfüllöffnung (302) des Transporttiegels (300) an einer vorgegebenen Position unterhalb der Andockkammer (130) positionierbar und die Andockkammer (130) durch eine vertikale Bewegung an die Einfüllöffnung (302) des Transporttiegels (300) andockbar ist.

13. System (2) umfassend eine Anordnung (4) nach einem der Ansprüche 9 bis 12 und einen Transporttiegel (300) mit einer Einfüllöffnung (302), wobei die Andockkammer (130) dazu eingerichtet ist, mit der Andocköffnung (132) an die Einfüllöffnung (302) des Transporttiegels (300) angedockt zu werden.

14. Verfahren zur Überführung einer Metallschmelze aus einem Schmelzofen (200) in einen Transporttiegel (300) mittels einer Anordnung (4) nach einem der Ansprüche 9 bis 12 mit folgenden Schritten:
- Bereitstellen eines Transporttiegels (300) in einer Befüllposition, insbesondere eines Transporttiegels gemäß eines Systems nach Anspruch 13,
- Andocken der Andockkammer (130) mit der Andocköffnung (132) an eine Einfüllöffnung (302) des Transporttiegels (300),
- Positionieren der Einlassöffnung (172) des Saugrohres (170) in einer Metallschmelze (6) im Schmelzofen (200),
- Aktivieren der Absaugeinrichtung (150), so dass in der Andockkammer (130) und/oder im Transporttiegel (300) ein Unterdruck gegenüber dem Umgebungsdruck erzeugt wird, so dass die Metallschmelze (6) durch die Einlassöffnung (172) des Saugrohres (170) eingesaugt und durch den Saugkanal (176) in den Transporttiegel (300) gelangt.

15. Verfahren nach Anspruch 14,
**dadurch gekennzeichnet,**
**dass** in der Andockkammer (130) und/oder im Transporttiegel (300) ein Unterdruck mit einer Druckdifferenz zum Umgebungsdruck im Bereich von 0,3 bis 0,8 bar, vorzugsweise 0,6 bis 0,7 bar, erzeugt wird.

## Claims

1. Station (100) for transferring a metal melt (6) from a melting furnace (200) to a transport crucible (300),
- with a suction device (150) and
- with a suction pipe (170) that has a suction channel (176) extending between an inlet opening (172) and an outlet opening (174),
**characterized in**
- **that** the station comprises a docking chamber (130) that has a docking opening (132) and is configured for being docked with the docking opening (132) to a filling opening (302) of a transport crucible (300),
- wherein the suction device (150) is configured to suction a gas from the docking chamber (130) and/or from a transport crucible (300) docked to the docking chamber (130), and
- wherein the inlet opening (172) is arranged outside the docking chamber (130) and the outlet opening (174) is arranged such that a metal melt (6) flowing through the suction channel (176) and exiting from the outlet opening (174) passes through the docking opening (132).

2. Station according to claim 1, **characterised in that** the docking chamber (130) has an attachment pipe (136), which is configured for mounting the suction pipe (170) to the docking chamber (130), in particular by means of a flange connection.

3. Station according to claim 2, **characterised in that** the suction pipe (170) has a preferably exchangeable section (178a), which can be inserted through the attachment pipe (136) into the docking chamber (130).

4. Station according to one of claims 1 to 3, **characterised in that** the suction device (150) has a suck-in channel (158) with a suck-in opening for suctioning a gas, wherein the suck-in opening is arranged in the docking chamber (130) and specifically in particular above the docking opening (132), preferably at least 5 cm, more preferably at least 10 cm, above the docking opening (132).

5. Station according to one of claims 1 to 4, **characterised in that** the outlet opening (174) is arranged above the docking opening (132), and specifically preferably at least 5 cm, in particular at least 10 cm, above the docking opening (132).

6. Station according to one of claims 1 to 5, **characterised in that** the station (100) has a sensor (146), preferably within the docking chamber (130), wherein the sensor (146) is configured to detect whether a filling opening (302) of a transport crucible (300) is arranged underneath the docking chamber (130) and/or whether the filling opening (302) of the transport crucible (300) is free for the docking of the docking chamber (130).

7. Station according to one of claims 1 to 6, **characterised in that** the docking chamber (130) is resiliently supported.

8. Station according to one of claims 1 to 7, **characterised in that** the suction device (150) configured for suctioning a gas from the docking chamber (130) includes a Venturi nozzle (152).

9. Assembly (4)
- with a melting furnace (200) that has a extraction opening (202) for removing a metal melt (6), and
- with a station (100) according to one of claims 1 to 8,
- wherein the station (100) is configured such that the inlet opening (172) of the suction pipe (170) can be immersed through the extraction opening (202) of the melting furnace (200) into a metal melt (6) in the melting furnace.

10. Assembly according to claim 9, comprising a transfer carriage (400) that is configured for driving a transport crucible (300) between an placing position and a filling position relative to the station (100), wherein the filling position is arranged such that the docking chamber (130) can be docked to a filling opening (302) of a transport crucible (300) when this is located in the filling position.

11. Assembly according to claim 9 or 10, comprising a weighing device that is arranged and configured to weigh a transport crucible (300) during the transfer of a metal melt (6) from the melting furnace (200) to the transport crucible (300).

12. Assembly according to claim 10 or 11, **characterised in that** the station (100) comprises a lifting device (112), which is configured for the substantially vertical movement of the docking chamber (130) and/or of the suction pipe (170), and that the assembly (4) is configured such that a transport crucible (300) can be positioned in a predetermined position on the transfer carriage (400) and can be driven by a linear movement of the transfer carriage (400) to the filling position, in such a way that a filling opening (302) of the transport crucible (300) can be positioned at a predetermined position underneath the docking chamber (130) and the docking chamber (130) can by a vertical movement be docked to the filling opening (302) of the transport crucible (300).

13. System (2) including an assembly (4) according to one of claims 9 to 12 and a transport crucible (300) with a filling opening (302), wherein the docking chamber (130) is configured for being docked with the docking opening (132) to the filling opening (302) of the transport crucible (300).

14. Method for transferring a metal melt from a melting furnace (200) to a transport crucible (300) by means of an assembly (4) according to one of claims 9 to 12, comprising the following steps:
- providing a transport crucible (300) in a filling position, in particular a transport crucible according to a system according to claim 13,
- docking the docking chamber (130) with the docking opening (132) at a filling opening (302) of the transport crucible (300),
- positioning the inlet opening (172) of the suction pipe (170) in a metal melt (6) in the melting furnace (200),
- activating the suction device (150) so that a reduced pressure relative to the ambient pressure is generated in the docking chamber (130) and/or in the transport crucible (300), so that the metal melt (6) is suctioned through the inlet opening (172) of the suction pipe (170) and passes through the suction channel (176) into the transport crucible (300).

15. Method according to claim 14, **characterised in that** a reduced pressure with a pressure difference in the range from 0.3 to 0.8 bar, preferably 0.6 to 0.7 bar relative to the ambient pressure is generated in the docking chamber (130) and/or in the transport crucible (300).

## Revendications

1. Station (100) pour transférer un métal en fusion (6) hors d'un four de fusion (200) dans un creuset de transport (300),
- avec un dispositif d'aspiration (150) et
- avec un tuyau d'aspiration (170) qui présente un canal d'aspiration (176) s'étendant entre une ouverture d'entrée (172) et une ouverture de sortie (174),
**caractérisée en ce**
- **que** la station comporte une chambre d'accueil (130) qui présente une ouverture d'accueil (132) et qui est conçue pour être accueillie avec l'ouverture d'accueil (132) au niveau d'une ouverture de remplissage (302) d'un creuset de transport (300),
- où le dispositif d'aspiration (150) est conçu pour l'aspiration d'un gaz hors de la chambre d'accueil (130) et/ou hors d'un creuset de transport (300) accueilli au niveau de la chambre d'accueil (130), et
- où l'ouverture d'entrée (172) est agencée à l'extérieur de la chambre d'accueil (130) et l'ouverture de sortie (174) est agencée de telle sorte qu'une masse fondue de métal (6) s'écoulant par le canal d'aspiration (176) et sortant de l'ouverture de sortie (174) arrive par l'ouverture d'accueil (132).

2. Station selon la revendication 1, **caractérisée en ce que** la chambre d'accueil (130) présente un tube de raccord (136) qui est conçu pour monter le tuyau d'aspiration (170) à la chambre d'accueil (130), en particulier à l'aide d'un raccord à bride.

3. Station selon la revendication 2, **caractérisée en ce que** le tuyau d'aspiration (170) présente une section (178a), de préférence interchangeable, qui peut être introduite par l'intermédiaire du tube de raccord (136) dans la chambre d'accueil (130).

4. Station selon l'une des revendications 1 à 3, **caractérisée en ce que** le dispositif d'aspiration (150) présente un canal d'aspiration (158) avec une ouverture d'aspiration pour l'aspiration d'un gaz, où l'ouverture d'aspiration est agencée dans la chambre d'accueil (130), et notamment en particulier au-dessus de l'ouverture d'accueil (132), de préférence au moins à 5 cm, plus préférablement au moins à 10 cm au-dessus de l'ouverture d'accueil (132).

5. Station selon l'une des revendications 1 à 4, **caractérisée en ce que** l'ouverture de sortie (174) est agencée au-dessus de l'ouverture d'accueil (132), et notamment de préférence au moins à 5 cm, en particulier au moins à 10 cm au-dessus de l'ouverture d'accueil (132).

6. Station selon l'une des revendications 1 à 5, **caractérisée en ce que** la station (100) présente un capteur (146), de préférence à l'intérieur de la chambre d'accueil (130), où le capteur (146) est conçu de sorte à constater si une ouverture de remplissage (302) d'un creuset de transport (300) est agencée en dessous de la chambre d'accueil (130) et/ou si l'ouverture de remplissage (302) du creuset de transport (300) est libre pour accueillir la chambre d'accueil (130).

7. Station selon l'une des revendications 1 à 6, **caractérisée en ce que** la chambre d'accueil (130) est montée de manière élastique.

8. Station selon l'une des revendications 1 à 7, **caractérisée en ce que** le dispositif d'aspiration (150) conçu pour l'aspiration d'un gaz hors de la chambre d'accueil (130) comporte une buse Venturi (152).

9. Agencement (4)
- avec un four de fusion (200) qui présente une ouverture d'évacuation (202) destinée à l'évacuation d'un métal en fusion (6), et
- avec une station (100) selon l'une des revendications là 8,
- où la station (100) est conçue de telle sorte que l'ouverture d'entrée (172) du tuyau d'aspiration (170) peut être plongée, par l'intermédiaire de l'ouverture d'évacuation (202) du four de fusion (200), dans un métal en fusion (6) dans le four de fusion.

10. Agencement selon la revendication 9, comportant un chariot de transfert (400) qui est conçu de sorte à déplacer un creuset de transport (300) entre une position de réglage et une position de remplissage par rapport à la station (100), où la position de remplissage est agencée de telle sorte que la chambre d'accueil (130) peut être accueillie à une ouverture de remplissage (302) d'un creuset de transport (300) lorsque celui-ci se trouve dans la position de remplissage.

11. Agencement selon la revendication 9 ou 10, comportant un dispositif de pesage qui est agencé et conçu pour peser un creuset de transport (300) pendant le transfert d'un métal en fusion (6) du four de fusion (200) dans le creuset de transport (300).

12. Agencement selon la revendication 10 ou 11, **caractérisé en ce que** la station (100) comporte un dispositif de levage (112) qui est conçu pour un mouvement essentiellement vertical de la chambre d'accueil (130) et/ou du tuyau d'aspiration (170), et
**en ce que** l'agencement (4) est conçu pour qu'un creuset de transport (300) puisse être positionné dans une position prédéterminée sur le chariot de transfert (400) et puisse être déplacé par un mouvement linéaire du chariot de transfert (400) dans la position de remplissage, de telle sorte que l'ouverture de remplissage (302) du creuset de transport (300) puisse être positionnée à une position prédéterminée en dessous de la chambre d'accueil (130) et la chambre d'accueil (130) puisse, par un mouvement vertical, être accueillie au niveau de l'ouverture de remplissage (302) du creuset de transport (300).

13. Système (2) comportant un arrangement (4) selon l'une des revendications 9 à 12 et un creuset de transport (300) avec une ouverture de remplissage (302), où la chambre d'accueil (130) est conçue de sorte à être accueillie avec l'ouverture d'accueil (132) au niveau de l'ouverture de remplissage (302) du creuset de transport (300).

14. Procédé de transfert d'un métal en fusion hors d'un four de fusion (200) dans un creuset de transport (300) à l'aide d'un arrangement (4) selon l'une des revendications 9 à 12 comportant les étapes suivantes :
- mise à disposition d'un creuset de transport (300) dans une position de remplissage, en particulier d'un creuset de transport conformément à un système selon la revendication 13,
- accueil de la chambre d'accueil (130) avec l'ouverture d'accueil (132) au niveau d'une ouverture de remplissage (302) du creuset de transport (300),
- positionnement de l'ouverture d'entrée (172) du tuyau d'aspiration (170) dans un métal en fusion (6) dans le four de fusion (200),
- activation du dispositif d'aspiration (150) de sorte à produire une dépression par rapport à la pression ambiante dans la chambre d'accueil (130) et/ou dans le creuset de transport (300), de sorte que le métal en fusion (6) soit aspiré à travers l'ouverture d'entrée (172) du tuyau d'aspiration (170) et parvienne, à travers le canal d'aspiration (176), dans le creuset de transport (300).

15. Procédé selon la revendication 14, **caractérisé en ce que** l'on produit dans la chambre d'accueil (130) et/ou dans le creuset de transport (300) une dépression avec une différence de pression par rapport à la pression ambiante dans une plage allant de 0,3 à 0,8 bar, de préférence 0,6 à 0,7 bar.
